(19) Europäisches Patentamt
European Patent Office
Office européen des brevets

(11) **EP 3 276 968 B1**

(12) **EUROPEAN PATENT SPECIFICATION**

(45) Date of publication and mention
of the grant of the patent:
**24.02.2021 Bulletin 2021/08**

(21) Application number: **16768587.4**

(22) Date of filing: **16.03.2016**

(51) Int Cl.:
*H04N 21/2362* (2011.01)   *H04N 5/225* (2006.01)
*H04N 21/4402* (2011.01)   *H04L 29/06* (2006.01)
*H04N 9/77* (2006.01)   *H04N 19/46* (2014.01)
*H04N 19/12* (2014.01)   *H04N 19/16* (2014.01)

(86) International application number:
**PCT/JP2016/058369**

(87) International publication number:
**WO 2016/152684 (29.09.2016 Gazette 2016/39)**

(54) **TRANSMISSION DEVICE, TRANSMISSION METHOD, RECEPTION DEVICE, AND RECEPTION METHOD**

SENDEVORRICHTUNG, SENDEVERFAHREN, EMPFANGSVORRICHTUNG UND EMPFANGSVERFAHREN

DISPOSITIF DE TRANSMISSION, PROCÉDÉ DE TRANSMISSION, DISPOSITIF DE RÉCEPTION ET PROCÉDÉ DE RÉCEPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.03.2015 JP 2015061767**

(43) Date of publication of application:
**31.01.2018 Bulletin 2018/05**

(73) Proprietor: **Sony Corporation**
**Tokyo 108-0075 (JP)**

(72) Inventor: **TSUKAGOSHI, Ikuo**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**JP-A- 2014 534 719**   **JP-A- 2015 008 361**
**US-A1- 2015 010 059**   **US-A1- 2015 042 890**

**Description**

TECHNICAL FIELD

The present technology relates to a transmission device, a transmission method, a reception device, and a reception method, and more particularly to a transmission device, etc. configured to transmit a plurality of kinds of transmission video data having predetermined opto-electrical transfer characteristics while switching the transmission video data.

BACKGROUND ART

In related art, there have been attempts to transmit transmission video data obtained by applying high dynamic range opto-electrical conversion to high dynamic range video data. Hereinafter, high dynamic range will be referred to as "HDR" where appropriate. For example, Non-Patent Document 1 teaches HDR opto-electrical transfer characteristics (new gamma characteristics) including regions compatible with conventionalopto-electricaltransfer characteristics (gamma characteristics) for reception with conventional receivers.
Patent document 1 discloses a mix of HDR and SDR content, identified by metadata.

CITATION LIST

NON-PATENT DOCUMENT

NON-PATENT DOCUMENT 1: TimBorer, "Non-Linear Opto-Electrical Transfer Functions for High Dynamic Range Television", Research & Development White Paper WHP 283, July 2014

PATENT DOCUMENT

PATENT DOCUMENT 1: US 2015/042890 A1

SUMMARY OF THE INVENTION

PROBLEMS TO BE SOLVED BY THE INVENTION

An object of the present technology is, in case where a plurality of transmission video data having predetermined opto-electrical transfer characteristics are switched therebetween and transmitted, to appropriately perform processes for obtaining image data for display from the transmission video data at a receiver side.

SOLUTIONS TO PROBLEMS

A concept of the present technology lies in a transmission device A transmission device including:

an encoding unit configured to encode transmission video data obtained by switching between a plurality of kinds of transmission video data having predetermined opto-electrical transfer characteristics to obtain a video stream;
a transmission unit configured to transmit a container in a predetermined format containing the video stream; and
an information insertion unit configured to insert, into the container, identification information representing a kind of a transmission video data in the video stream contained in the container, such that the identification information indicates a kind of transmission video data resulting from switching, from a timing a predetermined amount of time or longer before a timing of the switching.

In the present technology, transmission video data obtained by switching between a plurality of kinds of transmission video data having predetermined opto-electrical transfer characteristics are encoded by the encoding unit, and a video stream is obtained. A container in a predetermined format containing the video stream is transmitted by the transmission unit. For example, the container may be a TS stream or an MMT stream.
For example, the plurality of kinds of transmission video data may include: first transmission video data having a standard dynamic range opto-electrical transfer characteristic, the first transmission video data being obtained by performing opto-electrical conversion with the standard dynamic range opto-electrical transfer characteristic on standard dynamic range video data; and second transmission video data having a high dynamic range opto-electrical transfer characteristic, the second transmission video data being obtained by performing opto-electrical conversion with the high dynamic range opto-electrical transfer characteristic on high dynamic range video data.

In addition, for example, the plurality of kinds of transmission video data may include: first transmission video data having a high dynamic range opto-electrical transfer characteristic, the first transmission video data being obtained by performing opto-electrical conversion with the high dynamic range opto-electrical transfer characteristic on high dynamic range video data; and second transmission video data having a high dynamic range opto-electrical transfer characteristic, the second transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converted with the standard dynamic range opto-electrical transfer characteristic into a value of data converted with the high dynamic range opto-electrical transfer characteristic.

In addition, for example, the plurality of kinds of transmission video data may include: first transmission video data having a standard dynamic range opto-electrical transfer characteristic, the first transmission video data being obtained by performing opto-electrical conversion with the standard dynamic range opto-electrical transfer characteristic on standard dynamic range video data; second transmission video data having a high dynamic range opto-electrical transfer characteristic, the second transmission video data being obtained by performing opto-electrical conversion with the high dynamic range opto-electrical transfer characteristic on high dynamic range video data; and third transmission video data having a high dynamic range opto-electrical transfer characteristic, the third transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converted with the standard dynamic range opto-electrical transfer characteristic into a value of data converted with the high dynamic range opto-electrical transfer characteristic.

Identification information representing the kind of transmission video data included in the video stream contained in the container is inserted into the container by the information insertion unit, such that the identification information indicates the kind of transmission video data resulting from switching, from a timing that is a predetermined amount of time or longer before the switching timing. For example, the information insertion unit further may further insert, into the container, information on a reference level being a reference luminance level or information on branch level being a luminance level at which a trajectory followed by curves of a standard dynamic range opto-electrical transfer characteristic and a high dynamic range opto-electrical transfer characteristic bifurcates.

As described above, according to the present technology, identification information representing the kind of transmission video data included in the video stream contained in the container is inserted into the container, such that the identification information indicates the kind of transmission video data resulting from switching, from a timing that is a predetermined amount of time or longer before the switching timing. This allows the receiver side to recognize that the kind of transmission video data will be switched and further recognize the kind of transmission video data resulting from the switching, from the timing that is a predetermined amount of time or longer before the switching timing, and allows a process of obtaining image data for display from the transmission video data to be performed smoothly and appropriately even when the kind of transmission video data is switched.

Furthermore, another concept of the present technology lies in a reception device including: a reception unit configured to receive a container in a predetermined format containing a video stream obtained by encoding transmission video data, in which

the transmission video data is an output of switching between a plurality of kinds of transmission video data having predetermined opto-electrical transfer characteristics,

in the container, identification information representing a kind of transmission video data of the video stream contained by the container is inserted such that the identification information indicates the kind of transmission video data resulting from switching, from a timing a predetermined amount of time or longer before a timing of the switching, and

the reception device further includes:

a decoding unit configured to decode the video stream to obtain transmission video data; and
a processing unit configured to perform an electro-optical conversion process based on the identification information and display performance on the transmission video data obtained by the decoding unit, to obtain image data for display.

According to the present technology, a container in a predetermined format containing a video stream obtained by encoding transmission video data is received by the reception unit. Note that the transmission video data are an output of switching between a plurality of kinds of transmission video data having predetermined opto-electrical transfer characteristics, and that identification information representing a kind of transmission video data included in the video stream contained in container is inserted into the container such that the identification information indicates the kind of transmission video data resulting from switching, from a timing that is a predetermined amount of time or longer before the switching timing.

The video stream is decoded by the decoding unit, and transmission video data are obtained. An electro-optical conversion process based on the identification information and display performance is then performed by the processing unit on the transmission video data obtained by the decoding unit, and image data for display are obtained.

For example, the plurality of kinds of transmission video data may include: first transmission video data having a standard dynamic range opto-electrical transfer characteristic, the first transmission video data being obtained by performing opto-electrical conversion with the standard dynamic range opto-electrical transfer characteristic on standard dynamic range video data; and second transmission video data having a high dynamic range opto-electrical transfer characteristic, the second transmission video data being obtained by performing opto-electrical conversion with the high dynamic range opto-electrical transfer characteristic on high dynamic range video data, when the display performance is in a high dynamic range and: in a case where the transmission video data are the first transmission video data, the processing unit may perform dynamic range conversion on the transmission video data and then perform an electro-optical conversion process with the high dynamic range electro-optical transfer characteristic on the resulting transmission video data to obtain the image data for display, or in a case where the transmission video data are the second transmission video data, the processing unit may perform electro-optical conversion with the high dynamic range electro-optical transfer characteristic on the transmission video data to obtain the image data for display, and when the display performance is in a standard dynamic range and: in a case where the transmission video data are the first transmission video data, the processing unit may perform electro-optical conversion with a standard dynamic range electro-optical transfer characteristic on the transmission video data to obtain the image data for display, or in a case where the transmission video data are the second transmission video data, the processing unit may perform dynamic range conversion on the transmission video data and then perform electro-optical conversion with a standard dynamic range electro-optical transfer characteristic on the resulting transmission video data to obtain the image data for display.

In addition, for example, the plurality of kinds of transmission video data may include: first transmission video data having a high dynamic range opto-electrical transfer characteristic, the first transmission video data being obtained by performing opto-electrical conversion with the high dynamic range opto-electrical transfer characteristic on high dynamic range video data; and second transmission video data having a high dynamic range opto-electrical transfer characteristic, the second transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converted with the standard dynamic range opto-electrical transfer characteristic into a value of data converted with the high dynamic range opto-electrical transfer characteristic, when the display performance is in a high dynamic range and: in a case where the transmission video data are either of the first transmission video data and the second transmission video data, the processing unit may perform electro-optical conversion with the high dynamic range electro-optical transfer characteristic on the transmission video data to obtain the image data for display, and when the display performance is in a standard dynamic range and: in a case where the transmission video data are the first transmission video data, the processing unit may perform dynamic range conversion with a first conversion characteristic on the transmission video data and then perform electro-optical conversion with the standard dynamic range electro-optical transfer characteristic on the resulting transmission video data to obtain the image data for display, or in a case where the transmission video data are the second transmission video data, the processing unit may perform dynamic range conversion with a second conversion characteristic on the transmission video data and then perform electro-optical conversion with a standard dynamic range electro-optical transfer characteristic on the resulting transmission video data to obtain the image data for display.

In addition, for example, the plurality of kinds of transmission video data may include: first transmission video data having a standard dynamic range opto-electrical transfer characteristic, the first transmission video data being obtained by performing opto-electrical conversion with the standard dynamic range opto-electrical transfer characteristic on standard dynamic range video data; second transmission video data having a high dynamic range opto-electrical transfer characteristic, the second transmission video data being obtained by performing opto-electrical conversion with the high dynamic range opto-electrical transfer characteristic on high dynamic range video data; and third transmission video data having a high dynamic range opto-electrical transfer characteristic, the third transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converted with the standard dynamic range opto-electrical transfer characteristic into a value of data converted with the high dynamic range opto-electrical transfer characteristic, when the display performance is in a high dynamic range and: in a case where the transmission video data are the first transmission video data, the processing unit may perform dynamic range conversion on the transmission video data and then perform electro-optical conversion with a high dynamic range electro-optical transfer characteristic on the resulting transmission video data to obtain the image data for display, or in a case where the transmission video data are the second transmission video data or the third transmission video data, the processing unit may perform electro-optical conversion with a high dynamic range electro-optical transfer characteristic on the transmission video data to obtain the image data for display, and when the display performance is in a standard dynamic range and: in a case where the transmission video data are the first transmission video data, the processing unit may perform electro-optical conversion with a standard dynamic range electro-optical transfer characteristic on the transmission video data to obtain the image data for display, in a case where the transmission video data are the second transmission video data, the processing unit may perform dynamic range conversion with a first conversion characteristic on the transmission video data and then perform electro-optical conversion with a standard dynamic range electro-optical transfer characteristic on the resulting transmission video data to obtain the image data for display, or in a case where the transmission video data are the third transmission video data, the processing unit may perform dynamic range conversion with a second conversion characteristic on the transmission video data and then perform electro-optical conversion with a standard dynamic range electro-optical transfer characteristic on the resulting transmission video data to obtain the image data for display.

As described above, according to the present technology, identification information representing a kind of transmission video data included in the video stream contained in container is inserted into the container such that the identification information indicates the kind of transmission video data resulting from switching, from a timing that is a predetermined amount of time or longer before the switching timing, and an electro-optical conversion process based on the identification information and display performance is performed on transmission video data so that image data for display are obtained. The identification information allows recognition that the kind of transmission video data will be switched and further allows recognition of the kind of transmission video data resulting from the switching, from the timing that is a predetermined amount of time or longer before the switching timing, which allows an electro-optical conversion process of obtaining image data for display from the transmission video data to be performed smoothly and appropriately even when the kind of transmission video data is switched.

EFFECTS OF THE INVENTION

According to the present technology, in a case where a plurality of transmission video data having predetermined opto-electrical transfer characteristics are switched therebetween and transmitted, processes for obtaining image data for display from the transmission video data can be appropriately performed at a receiver side. Note that the effects mentioned herein are exemplary only and are not limiting, and additional effects may also be produced.

BRIEF DESCRIPTION OF DRAWINGS

Fig. 1 is a block diagram illustrating an example configuration of a transmission/reception system according to an embodiment.
Fig. 2 is a block diagram illustrating an example configuration of a service transmission system.
Fig. 3 is a graph for explaining opto-electrical transfer characteristics.
Fig. 4 is a figure for explaining the relation between a timing of switching transmission video data and a timing of inserting identification information for identifying transmission video data resulting from the switching.
Fig. 5 is a table describing an example structure of HDR descriptor_type1.
Fig. 6 is a table describing an example structure of HDR descriptor_type3.
Fig. 7 is a figure describing details of major information in the example structures of the descriptors.
Fig. 8 is a diagram illustrating an example of a structure of an MPEG-2 transport stream (TS structure).
Fig. 9 is a diagram illustrating an example of a structure of an MMT stream (MMT structure).
Fig. 10 is a block diagram illustrating another example configuration of a service transmission system.
Fig. 11 is a graph for explaining operation of a dynamic range conversion unit in the service transmission system.
Fig. 12 is a graph for explaining operation of the dynamic range conversion unit in the service transmission system.
Fig. 13 is a table describing an example structure of HDR descriptor_type2.
Fig. 14 is a diagram illustrating an example of a structure of an MPEG-2 transport stream (TS structure).
Fig. 15 is a diagram illustrating an example of a structure of an MMT stream (MMT structure).
Fig. 16 is a block diagram illustrating another example configuration of a service transmission system.
Fig. 17 is a table describing an example structure of a dynamic range conversion descriptor.
Fig. 18 is a figure describing details of major information in the example structure of the dynamic range conversion descriptor.
Fig. 19 is a diagram illustrating an example of a structure of an MPEG-2 transport stream (TS structure).
Fig. 20 is a diagram illustrating an example of a structure of an MMT stream (MMT structure).
Fig. 21 is a block diagram illustrating an example configuration of a service receiver.

Fig. 22 is a graph for explaining operation of an HDR/SDR conversion unit in the service receiver.
Fig. 23 is a graph for explaining operation of the HDR/SDR conversion unit in the service receiver.
Fig. 24 is a graph for explaining operation of the HDR/SDR conversion unit in the service receiver.
Fig. 25 is a block diagram illustrating another example configuration of a service receiver.
Fig. 26 is a graph for explaining operation of an SDR/HDR conversion unit in the service receiver.

MODES FOR CARRYING OUT THE INVENTION

A mode (hereinafter referred to as an "embodiment") for carrying out the present technology will be described below. Note that the description will be made in the following order.

1. Embodiment
2. Modifications

<1. Embodiment>

[Example configuration of a transmission/reception system]

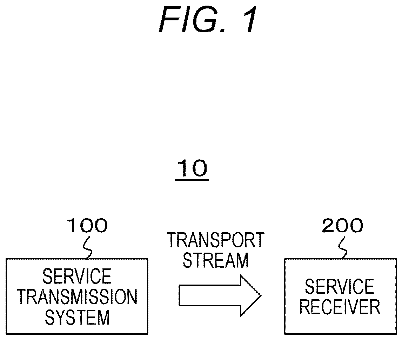

Fig. 1 illustrates an example configuration of a transmission/reception system 10 according to an embodiment. The transmission/reception system 10 includes a service transmission system 100 and a service receiver 200. The service transmission system 100 generates an MPEG-2 transport stream or an MPEG media transport (MMT) stream as a container, and transmits the transport stream on a broadcast wave or in a packet over a network.
A transport stream includes a video stream obtained by switching between a plurality of kinds of transmission video data having predetermined opto-electrical transfer characteristics and encoding the resulting transmission video data. A transport stream has identification information representing the kind of transmission video data contained in the video stream included in the transport stream, such that the identification information is inserted to indicate the kind of transmission video data resulting from switching, from a timing that is a predetermined amount of time or longer before the switching timing.
The service receiver 200 receives the transport stream (the MPEG-2 transport stream or the MMT stream) transmitted from service transmission system 100. The service receiver 200 decodes video stream contained in the transport stream to obtain the transmission video data. The service receiver 200 also performs an electro-optical conversion process based on the identification information inserted in the transport stream and display performance to obtain image data for display.

"Example configuration of service transmission system"

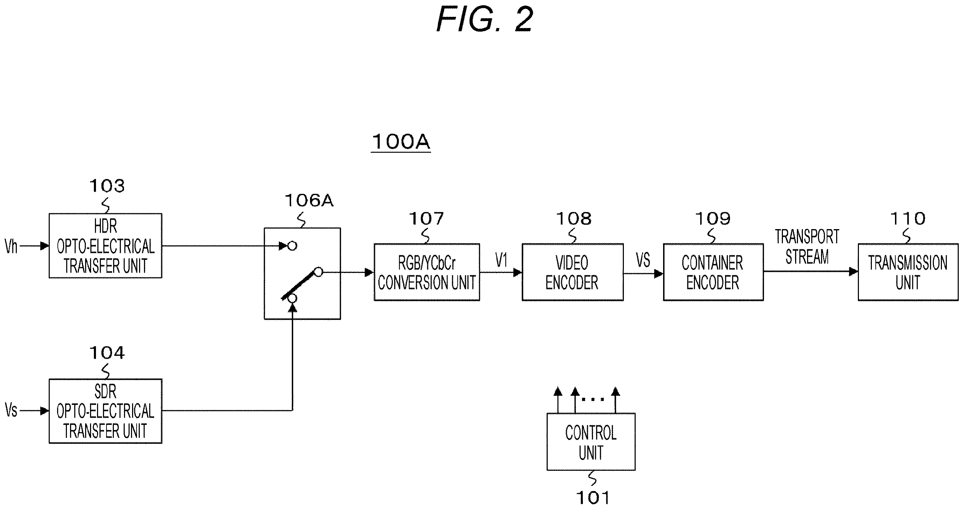

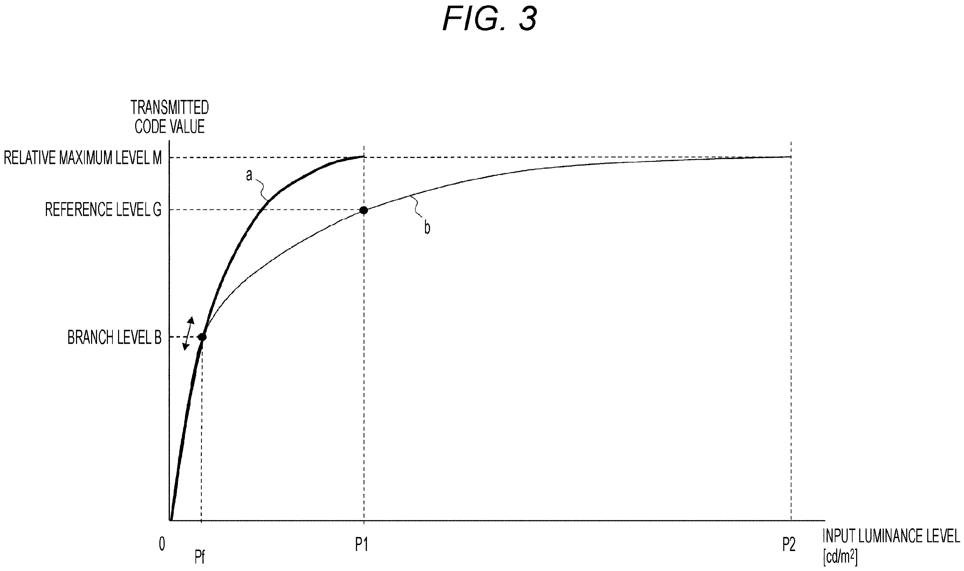

Fig. 2 illustrates an example configuration of a service transmission system 100A, which corresponds to the service transmission system 100 of Fig. 1. The service transmission system 100A includes a control unit 101, a high dynamic range (HDR) opto-electrical transfer unit 103, a standard dynamic range (SDR) opto-electrical transfer unit 104, a switch 106A, an RGB/YCbCr conversion unit 107, a video encoder 108, a container encoder 109, and a transmission unit 110.
The control unit 101 includes a central processing unit (CPU), and controls operation of the respective units of the service transmission system 100A on the basis of control programs. The HDR opto-electrical transfer unit 103 performs opto-electrical conversion by applying an HDR opto-electrical transfer characteristic to a high-contrast camera output, that is, HDR video data Vh to obtain HDR transmission video data (transmission video data having the HDR opto-electrical transfer characteristic). The HDR transmission video data are video materials produced by the HDR OETF.
The SDR opto-electrical transfer unit 104 performs opto-electrical conversion by applying an SDR opto-electrical transfer characteristic to a standard-contrast camera output, that is, SDR video data Vs to obtain SDR transmission video data (transmission video data having the SDR opto-electrical transfer characteristic). The SDR transmission video data are video materials produced by the SDR OETF.
The opto-electrical transfer characteristics will be explained with reference to Fig. 3. A solid curve a is an example of an SDR OETF curve representing the SDR opto-electrical transfer characteristic. A solid curve b is an example of an HDR OETF curve representing the HDR opto-electrical transfer characteristic. The horizontal axis represents an input luminance level, P1 represents the input luminance level at the maximum SDR level, and P2 represents the input luminance level at the maximum HDR level.
In addition, the vertical axis represents a transmitted code value or a relative value of normalized coding level. A relative maximum level M represents the maximum level in HDR transmission and the maximum level in SDR transmission. A reference level G represents the transmission level of the HDR OETF at the input luminance level P1 at the maximum SDR level, which refers to a so-called reference white level and indicates that a range higher than this level is used for glittering expressions characteristic of the HDR. A branch level B represents a level where the trajectory followed by the SDR OETF curve and the HDR OETF curve bifurcates. Pf represents the input luminance level at the branch level. Note that the branch level B can be any value not smaller than 0.

The switch 106A selectively extracts SDR transmission video data (transmission video data A) obtained by the SDR opto-electrical transfer unit 104 or HDR transmission video data (transmission video data B) obtained by the HDR opto-electrical transfer unit 103. This switching is performed in units of a program or in units equivalent thereto .

The RGB/YCbCr conversion unit 107 converts transmission video data V1 extracted by the switch 106A from the RGB domain to the YCbCr (luminance/chrominance) domain. Note that the color space domain is not limited to the RGB domain, and that the luminance/chrominance domain is not limited to the YCbCr.

The video encoder 108 encodes the transmission video data V1, resulting from the conversion to the YCbCr domain by the RGB/YCbCr conversion unit 107, in MPEG4-AVC or HEVC, for example, to obtain encoded video data, and generates a video stream (video elementary stream) VS containing the encoded video data.

In this process, the video encoder 108 inserts meta-information, such as information indicating whether the video stream is an SDR stream or an HDR stream and information indicating an electro-optical transfer characteristic associated with the opto-electrical transfer characteristic of the transmission video data V1, into a region of video usability information (VUI) of an SPS NAL unit of an access unit (AU).

In this case, when the transmission video data V1 are the transmission video data A (the SDR transmission video data obtained by the SDR opto-electrical transfer unit 104), the opto-electrical transfer characteristic of the transmission video data V1 is the opto-electrical transfer characteristic of the SDR opto-electrical transfer unit 104. In contrast, when the transmission video data V1 are the transmission video data B (the HDR transmission video data obtained by the HDR opto-electrical transfer unit 103), the opto-electrical transfer characteristic of the transmission video data V1 is the opto-electrical transfer characteristic of the HDR opto-electrical transfer unit 103.

The container encoder 109 generates a transport stream (an MPEG-2 transport stream or an MMT stream) containing the video stream VS generated by the video encoder 108. The transmission unit 110 transmits the transport stream on a broadcast wave or in a packet over a network to the service receiver 200.

For this process, the container encoder 109 inserts identification information representing the transmission video data A or the transmission video data B into the transport stream. In this case, the container encoder 109 inserts the identification information into the transport stream so that the identification information indicates the kind of transmission video data resulting from switching, from a timing that is a predetermined amount of time or longer before the switching timing. The insertion of the identification information is controlled in this manner allows the receiver side to be informed of dynamic switching of transmission video data.

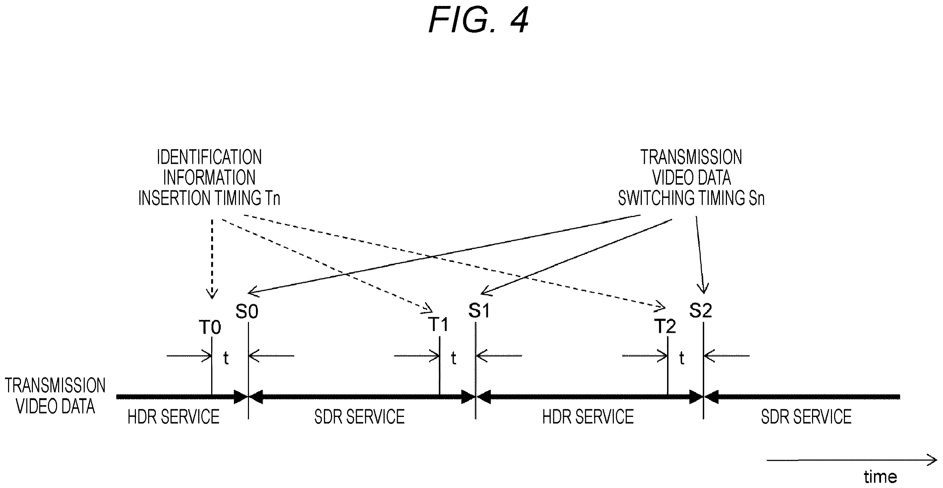

Fig. 4 illustrates the relation between the timings Sn (S0, S1, S2, ...) of switching between the transmission video data A (SDR service) and the transmission video data B (HDR service) and the timings Tn (T0, T1, T2, ...) of insertion of the identification information for identifying the transmission video data resulting from switching. The timing Tn is a timing of t (predetermined amount of time) or more before the timing Sn such that the expression (1) below is satisfied. Note that the example illustrated in Fig. 4 shows a case in which Sn - Tn = t (where t is a positive value).

$$Sn-Tn \geq t \quad \cdots (1)$$

The container encoder 109 inserts a descriptor of HDR descriptor_type1 or HDR descriptor_type3, which describes identification information and which is newly defined, for example. The descriptor is inserted under a program map table (PMT) when the transport stream is an MPEG-2 transport stream, or inserted under an MMT package table (MP table) when the transport stream is an MMT stream, for example.

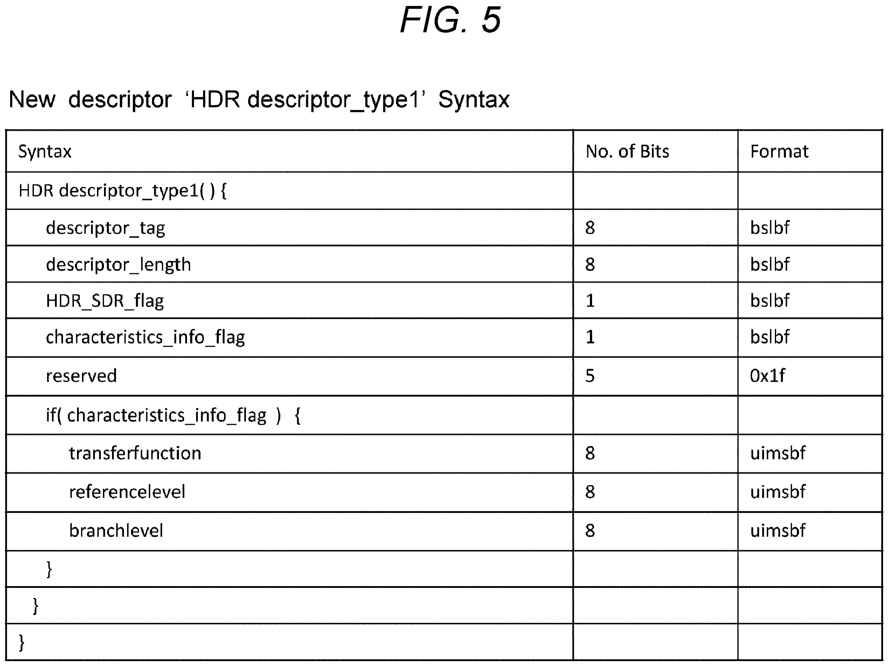

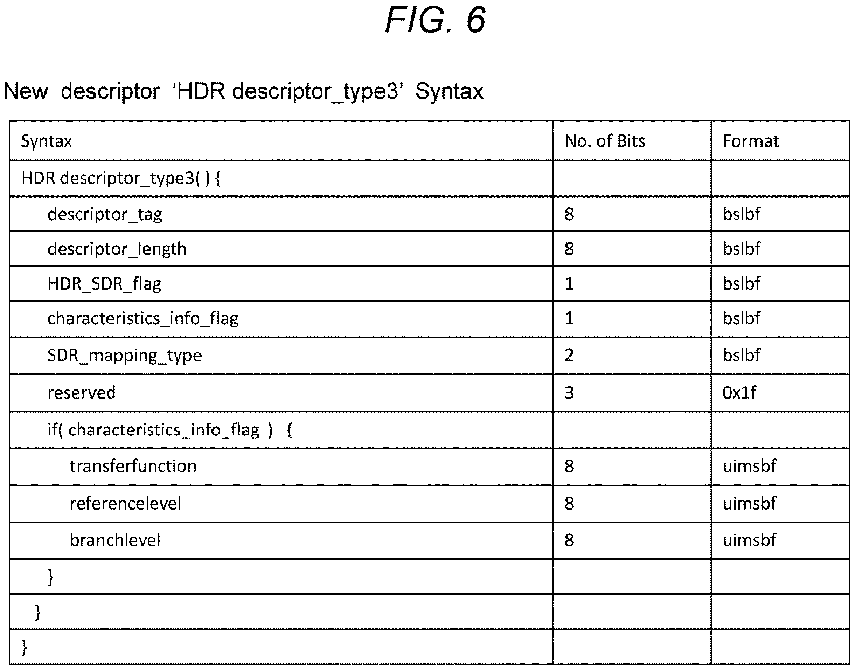

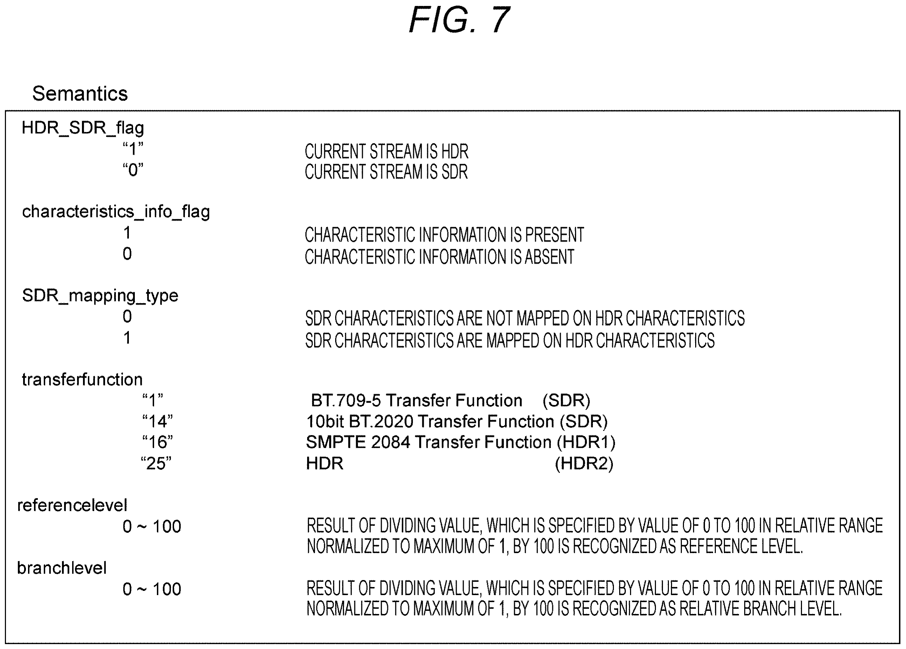

Fig. 5 shows an example structure (syntax) of HDR descriptor_type1, and Fig. 6 shows an example structure (syntax) of HDR descriptor_type3, and Fig. 7 shows details (semantics) of major information in these example structures.

The descriptor of HDR descriptor_type1 shown in Fig. 5 will be explained. An 8-bit field of "descriptor_tag" represents the type of the descriptor, which is the descriptor of HDR descriptor_type1 here. An 8-bit field of "descriptor_length" represents the length (size) of the descriptor, and indicates the number of subsequent bytes as the length of the descriptor.

One-bit flag information of "HDR_SDR_flag" indicates that a current stream is an HDR stream or an SDR stream. "1" indicates that the current stream is an HDR stream, and "0" indicates that the current stream is an SDR stream. One-bit flag information of "characteristics_info_flag" indicates whether or not characteristic information is present. "1" indicates that characteristic information is present, and "0" indicates that characteristic information is absent.

When "characteristics_info_flag" is "1," the following field is present. An 8-bit field of "transferfunction" represents an electro-optical transfer characteristic (EOTF characteristics). In other words, this field indicates an electro-optical transfer characteristic associated with the opto-electrical transfer characteristic of the transmission video data V1. For example, "1" indicates "BT.709-5 transfer characteristic (SDR)," "14" indicates "10bitBT.2020 transfer characteristic (SDR)," "16" indicates "SMPTE 2084 transfer characteristic (HDR1)," and "25" indicates "HDR (HDR2)." Note that "HDR (HDR2)" represents an HDR electro-optical transfer characteristic, which is not a PQ curve but is considered to be partially compatible with the conventional gamma characteristics in luminance/transmission characteristics or to have similar characteristics.

An 8-bit field of "referencelevel" represents the reference level G (see Fig. 3). In this case, a value specified by a value of 0 to 100 in a relative range normalized to a maximum of "1" is described as the reference level G At the receiver side, a result of dividing the value by 100 is recognized as a normalized relative reference level. An 8-bit field of "branchlevel" represents the branch level B (see Fig. 3). In this case, a value specified by a value of 0 to 100 in a relative range normalized to a maximum of "1" is described as the branch level B. At the receiver side, a result of dividing the value by 100 is recognized as the branch level.

In the descriptor of HDR descriptor_type1, the descriptor type information in the "descriptor_tag" field and the information indicating whether the stream is HDR or SDR in the "HDR_SDR_flag" field indicate that the transmission video data V1 are the transmission video data A or the transmission video data B.

The descriptor of HDR descriptor_type3 shown in Fig. 6 will be explained. An 8-bit field of "descriptor_tag" represents the type of the descriptor, which is the descriptor of HDR descriptor_type3 here. An 8-bit field of "descriptor_length" represents the length (size) of the descriptor, and indicates the number of subsequent bytes as the length of the descriptor.

One-bit flag information of "HDR_SDR_flag" indicates that a current stream is an HDR stream or an SDR stream. "1" indicates that the current stream is an HDR stream, and "0" indicates that the current stream is an SDR stream. One-bit flag information of "characteristics_info_flag" indicates whether or not characteristic information is present. "1" indicates that characteristic information is present, and "0" indicates that characteristic information is absent.

A 2-bit field of "SDR_mapping_type" indicates whether or not the characteristics of SDR are mapped on the characteristics of HDR. "0" indicates that the characteristics of SDR are not mapped on the characteristics of HDR, that is, the characteristics of SDR are to be transmitted without being mapped on the characteristics of HDR. "1" indicates that the characteristics of SDR are mapped on the characteristics of HDR, that is, the characteristics of SDR are mapped on the characteristics of HDR before being transmitted. In the service transmission system 100A illustrated in Fig. 2, "SDR_mapping_type" is always "0."

When "characteristics_info_flag" is "1," 8-bit fields of "transferfunction," "referencelevel," and "branchlevel" are present similarly to the descriptor of HDR descriptor_type1 shown in Fig. 5.

In the descriptor of HDR descriptor_type3, the information indicating whether the stream is HDR or SDR in the "HDR_SDR_flag" field and the information indicating whether the SDR characteristics are mapped on the HDR characteristics in the "SDR_mapping_type" field indicate the transmission video data A or the transmission video data B.

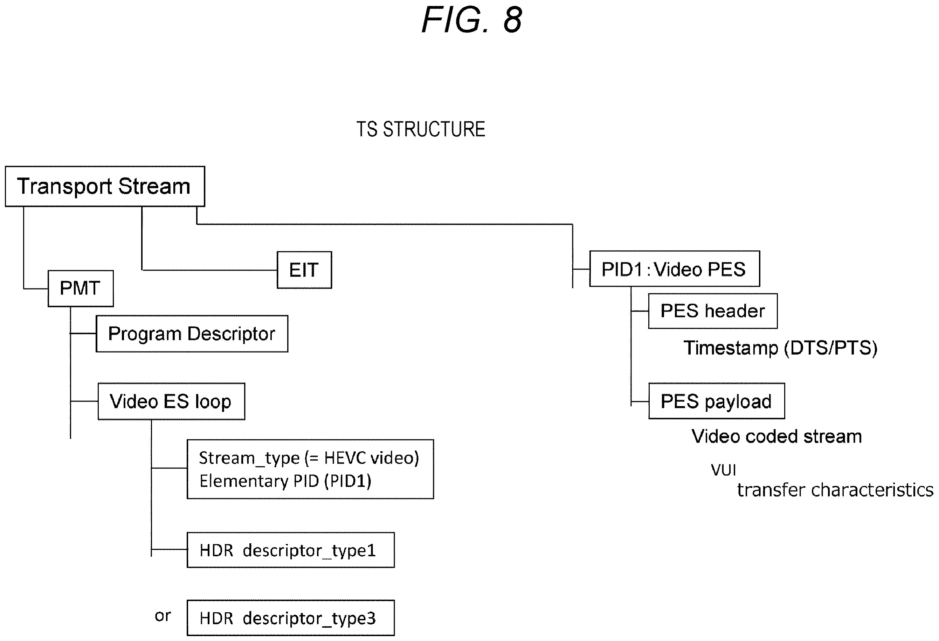

Fig. 8 illustrates an example of a structure of an MPEG-2 transport stream (TS structure). In this example structure, a PES packet "Video PES" of a video stream identified by PID1 is present. Meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS of an access unit.

The transport stream TS also includes a program map table (PMT) as program specific information (PSI). The PSI is information describing which program each of elementary streams contained in the transport stream belongs to. A program loop describing information related to the entire program is present in the PMT.

An elementary stream loop having information related to the elementary streams is present in the PMT. In this example structure, a video elementary stream loop (video ES loop) associated with the video stream is present. In the video elementary stream loop (video ES loop), information such as the stream type, a packet identifier (PID), and the like is arranged in association with the video stream, and a descriptor describing information related to the video stream is also arranged.

Assume that the value of "Stream_type" of the video stream is set to a value indicating an HEVC video stream, for example, and that the PID information indicates PID1 assigned to a PES packet "video PES" of the video stream. The descriptor of HDR descriptor_type1 or the descriptor of HDR descriptor_type3 described above is inserted as one of descriptors.

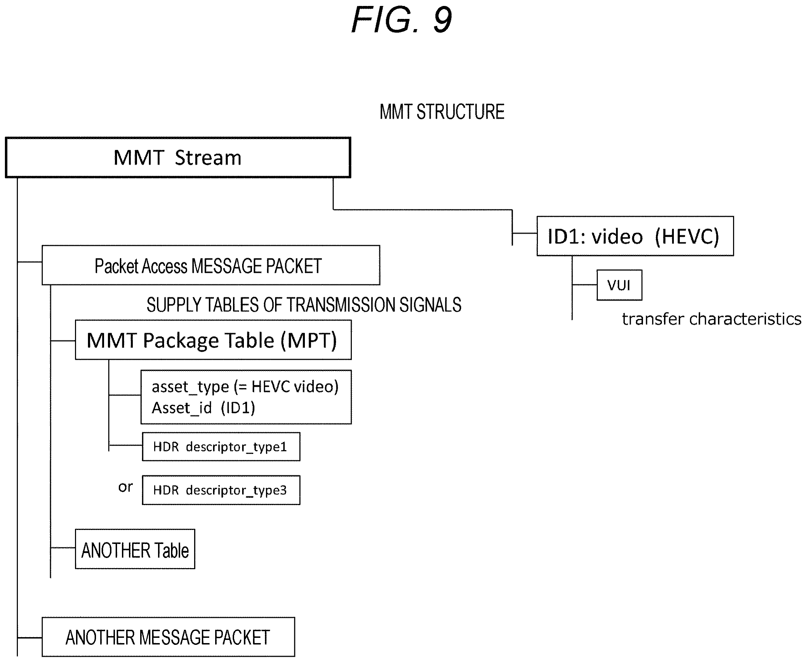

Fig. 9 illustrates an example of a structure of an MMT stream (MMT structure). MMT packets of assets such as MMT video and audio are present in an MMT stream. In the example structure illustrated in Fig. 9, an MMT packet of a video asset identified by ID1 is present. Meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS of an access unit.

In addition, message packets such as a packet access (PA) message packet are present in an MMT stream.

A PA message packet contains a table such as an MMT packet table (MMT package table) . An MP table contains information on each asset. The descriptor of HDR descriptor_type1 or the descriptor of HDR descriptor_type3 described above is inserted.

Operation of the service transmission system 100A illustrated in Fig. 2 will be briefly explained. HDR video data Vh, which are a high-contrast camera output, are supplied to the HDR opto-electrical transfer unit 103. In the HDR opto-electrical transfer unit 103, opto-electrical conversion using the HDR opto-electrical transfer characteristic is performed on the HDR video data Vh, and HDR transmission video data (transmission video data having the HDR opto-electrical transfer characteristic) are obtained as video materials produced by the HDR OETF.

In addition, SDR video data Vs, which are a standard-contrast camera output, are supplied to the SDR opto-electrical transfer unit 104. In the SDR opto-electrical transfer unit 104, opto-electrical conversion using the SDR opto-electrical transfer characteristic is performed on the SDR video data Vs, SDR transmission video data (transmission video data having the SDR opto-electrical transfer characteristic) are obtained as video materials produced by the SDR OETF.

In the switch 106A, transmission video data A (SDR transmission video data) obtained by the SDR opto-electrical transfer unit 104 or transmission video data B (HDR transmission video data) obtained by the HDR opto-electrical transfer unit 103 are selectively extracted under the control of the control unit 101. The thus extracted transmission video data are converted from the RGB domain to the YCbCr (luminance/chrominance) domain by the RGB/YCbCr conversion unit 107.

The transmission video data V1 resulting from the conversion to YCbCr domain are supplied to the video encoder 108. In the video encoder 108, encoding in MPEG4-AVC or HEVC, for example is performed on the transmission video data V1, encoded video data are obtained, and a video stream VS containing the encoded video data is generated. In this process, in the video encoder 108, meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS NAL unit of an access unit (AU).

The video stream VS obtained by the video encoder 108 is supplied to the container encoder 109. In the container encoder 109, a transport stream (an MPEG-2 transport stream or an MMT stream) containing the video stream VS generated by the video encoder 108 is generated. The transport stream is transmitted by transmission unit 110 on a broadcast wave or in a packet over a network to the service receiver 200.

For this process, in the container encoder 109, a descriptor (the descriptor of HDR descriptor_type1 (see Fig. 5) or the descriptor of HDR descriptor_type3 (see Fig. 6)) describing identification information representing the transmission video data A or the transmission video data B is inserted into the transport stream that is a container. In this case, in the container encoder 109, the identification information is inserted so that the identification information indicates the kind of transmission video data resulting from switching, from a timing that is a predetermined amount of time before the switching timing.

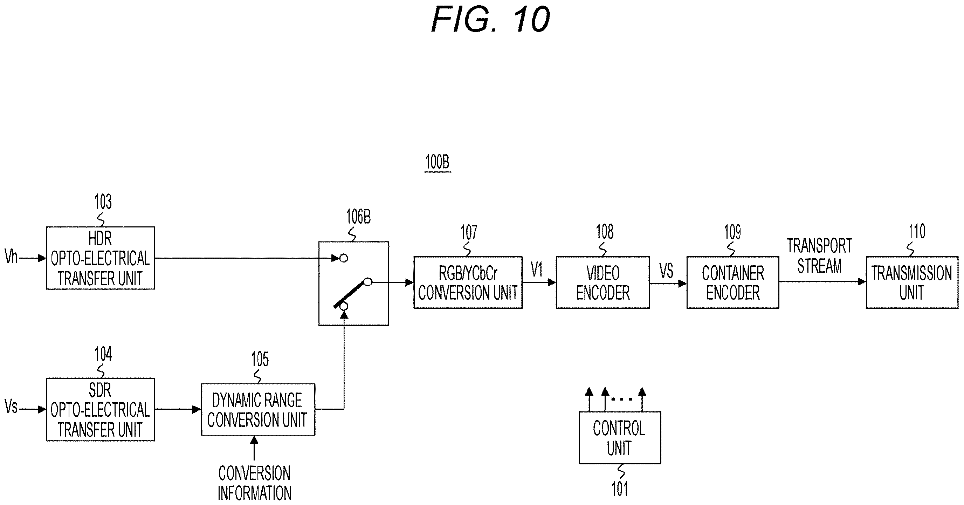

Fig. 10 illustrates an example configuration of a service transmission system 100B, which corresponds to the service transmission system 100 of Fig. 1. In Fig. 10, parts corresponding to those in Fig. 2 are designated by the same reference numerals, and detailed description thereof will not be repeated as appropriate. The service transmission system 100B includes a control unit 101, an HDR opto-electrical transfer unit 103, an SDR opto-electrical transfer unit 104, a dynamic range conversion unit 105, a switch 106B, an RGB/YCbCr conversion unit 107, a video encoder 108, a container encoder 109, and a transmission unit 110.

The control unit 101 includes a CPU, and controls operation of the respective units of the service transmission system 100B on the basis of control programs. The HDR opto-electrical transfer unit 103 performs opto-electrical conversion by applying an HDR opto-electrical transfer characteristic to a high-contrast camera output, that is, HDR video data Vh to obtain HDR transmission video data (transmission video data having the HDR opto-electrical transfer characteristic). The HDR transmission video data are video materials produced by the HDR OETF.

The SDR opto-electrical transfer unit 104 performs opto-electrical conversion by applying an SDR opto-electrical transfer characteristic to a standard-contrast camera output, that is, SDR video data Vs to obtain SDR transmission video data (transmission video data having the SDR opto-electrical transfer characteristic). The SDR transmission video data are video materials produced by the SDR OETF.

The dynamic range conversion unit 105 performs dynamic range conversion on the SDR transmission video data to obtain HDR transmission video data (transmission video data having the HDR opto-electrical transfer characteristic). Specifically, the dynamic range conversion unit 105 converts the SDR transmission video data that are video materials produced by the SDR OETF into HDR transmission video data. Note that the dynamic range conversion unit 105 performs the dynamic range conversion on the basis of conversion information for converting the value of data converted with the SDR opto-electrical transfer characteristic to the value of data converted with the HDR opto-electrical transfer characteristic. The conversion information is provided by the control unit 101, for example.

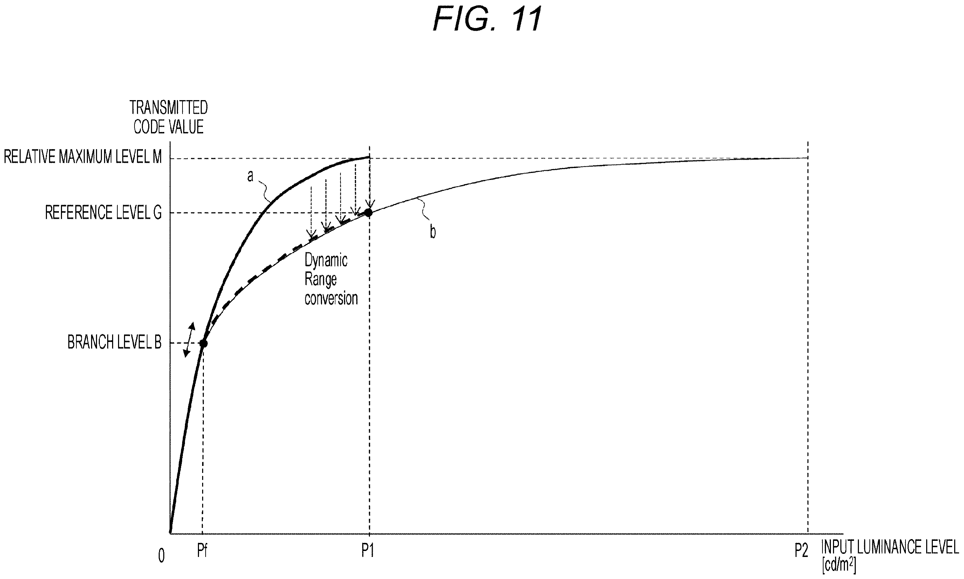

The dynamic range conversion will be further described with reference to Fig. 11. A solid curve a is an example of an SDR OETF curve representing the SDR opto-electrical transfer characteristic. A solid curve b is an example of an HDR OETF curve representing the HDR opto-electrical transfer characteristic. The horizontal axis represents an input luminance level, P1 represents the input luminance level at the maximum SDR level, and P2 represents the input luminance level at the maximum HDR level.

In addition, the vertical axis represents a transmitted code value or a relative value of normalized coding level. A relative maximum level M represents the maximum level in HDR transmission and the maximum level in SDR transmission. A reference level G represents the transmission level of the HDR OETF at the input luminance level P1 at the maximum SDR level, which refers to a so-called reference white level and indicates that a range higher than this level is used for glittering expressions characteristic of the HDR.

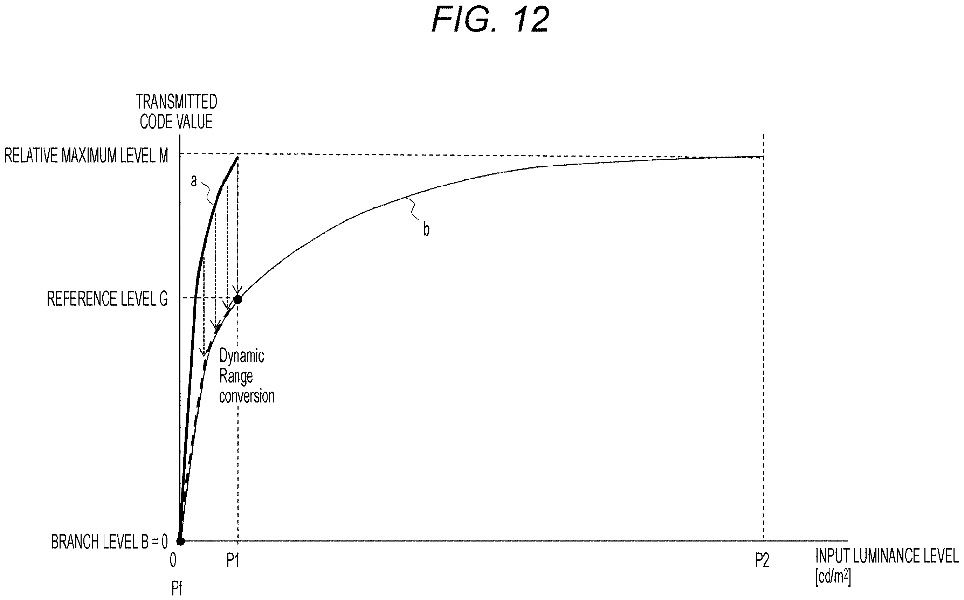

A branch level B represents a level where the trajectory followed by the SDR OETF curve and the HDR OETF curve bifurcates. Pf represents the input luminance level at the branch level. Note that the branch level B can be any value not smaller than 0. Fig. 12 shows an example of a case in which the branch level B is 0.

The dynamic range conversion in the dynamic range conversion unit 105 is performed so that data at the branch level B or higher but the relative maximum level M or lower among the SDR transmission video data are converted to have the value of data converted with the HDR opto-electrical transfer characteristic. In this case, the relative maximum level M that is the maximum SDR level is made to be equal to the reference level G. Note that input data not higher than the branch level B are output as output data without any change .

Note that the conversion information is in a form of a conversion table or a conversion coefficient. In a case where the conversion information is in a form of a conversion table, the dynamic range conversion unit 105 refers to the conversion table to perform the conversion. On the other hand, in a case where the conversion information is in a form of a conversion coefficient, the dynamic range conversion unit 105 performs the conversion by computation using the conversion coefficient. For example, when the conversion coefficient is represented by C, conversion is performed on input data at the branch level B or higher but the relative maximum level M or lower by the following expression (2).

$$\text{Output data} = \text{branch level B} + (\text{input data} - \text{branch level B}) * C \quad \cdots (2)$$

The description refers back to Fig. 10, in which the switch 106B selectively extracts HDR transmission video data (transmission video data B) obtained by the HDR opto-electrical transfer unit 103 or HDR transmission video data (transmission video data C) obtained by the dynamic range conversion unit 105.

The RGB/YCbCr conversion unit 107 converts transmission video data V1 extracted by the switch 106B from the RGB domain to the YCbCr (luminance/chrominance) domain. The video encoder 108 encodes the transmission video data V1, resulting from the conversion to the YCbCr domain by the RGB/YCbCr conversion unit 107, in MPEG4-AVC or HEVC, for example, to obtain encoded video data, and generates a video stream VS containing the encoded video data.

In this process, the video encoder 108 inserts meta-information, such as information indicating whether the video stream is an SDR stream or an HDR stream and information (transfer function) indicating an electro-optical transfer characteristic associated with the opto-electrical transfer characteristic of the transmission video data V1, into a region of VUI of an SPS NAL unit of an access unit (AU).

Note that the opto-electrical transfer characteristic of the transmission video data V1 is the opto-electrical transfer characteristic of the HDR opto-electrical transfer unit 103 both when the transmission video data V1 are the transmission video data B (the HDR transmission video data obtained by the HDR opto-electrical transfer unit 104) and when the transmission video data V1 are the transmission video data C (the HDR transmission video data are obtained by the dynamic range conversion unit 105).

The container encoder 109 generates a transport stream (an MPEG-2 transport stream or an MMT stream) containing the video stream VS generated by the video encoder 108. The transmission unit 110 transmits the transport stream on a broadcast wave or in a packet over a network to the service receiver 200.

For this process, the container encoder 109 inserts identification information representing the transmission video data B or the transmission video data C into the transport stream. In this case, the container encoder 109 inserts the identification information into the transport stream so that the identification information indicates the kind of transmission video data resulting from switching, from a timing that is a predetermined amount of time or longer before the switching timing (see Fig. 4). The insertion of the identification information is controlled in this manner allows the receiver side to be informed of dynamic switching of transmission video data.

The container encoder 109 inserts a descriptor of HDR descriptor_type2 or HDR descriptor_type3 described above (see Fig. 6), which describes identification information and which is newly defined, for example. The descriptor is inserted under a program map table when the transport stream is an MPEG-2 transport stream, or inserted under an MP table when the transport stream is an MMT stream, for example.

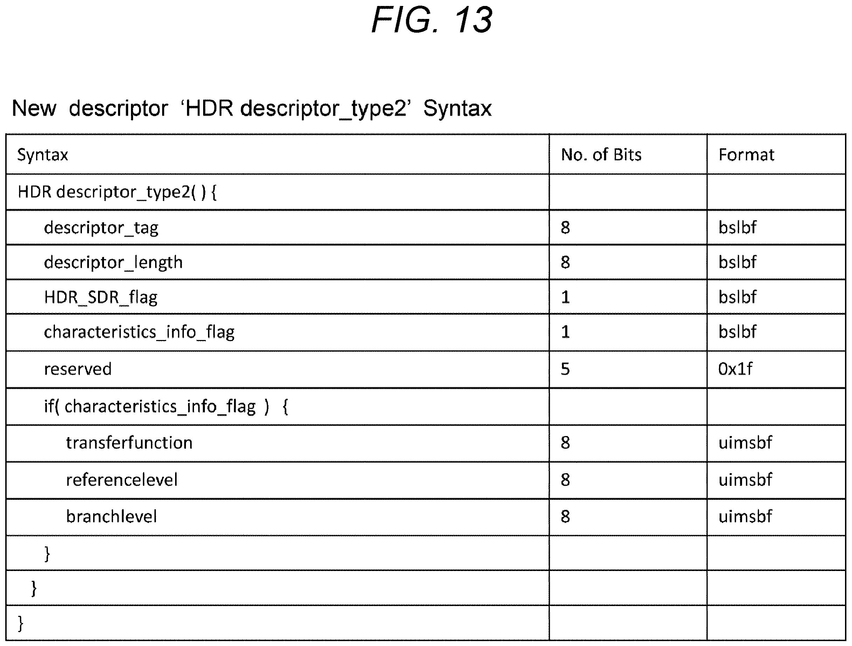

Fig. 13 shows an example structure (syntax) of the descriptor of HDR descriptor_type2. An 8-bit field of "descriptor_tag" represents the type of the descriptor, which is the descriptor of HDR descriptor_type2 here. An 8-bit field of "descriptor_length" represents the length (size) of the descriptor, and indicates the number of subsequent bytes as the length of the descriptor.

One-bit flag information of "HDR_SDR_flag" indicates that a current stream is an HDR stream or an SDR stream. "1" indicates that the current stream is an HDR stream, and "0" indicates that the current stream is an SDR stream. One-bit flag information of "characteristics_info_flag" indicates whether or not characteristic information is present. "1" indicates that characteristic information is present, and "0" indicates that characteristic information is absent. When "characteristics_info_flag" is "1," 8-bit fields of "transferfunction," "referencelevel," and "branchlevel" are present similarly to the descriptor of HDR descriptor_type1 shown in Fig. 5.

In the descriptor of HDR descriptor_type2, the type information of the descriptor in the "descriptor_tag" field and the information indicating whether the stream is HDR or SDR in the "HDR_SDR_flag" field indicate whether the transmission video data V1 are the transmission video data B or the transmission video data C.

Note that, in the descriptor of HDR descriptor_type3 (see Fig. 6), which is inserted instead of HDR descriptor_type2, the information indicating whether the stream is HDR or SDR in the "HDR_SDR_flag" field and the information indicating whether the SDR characteristics are mapped on the HDR characteristics in the "SDR_mapping_type" field indicate the transmission video data B or the transmission video data C.

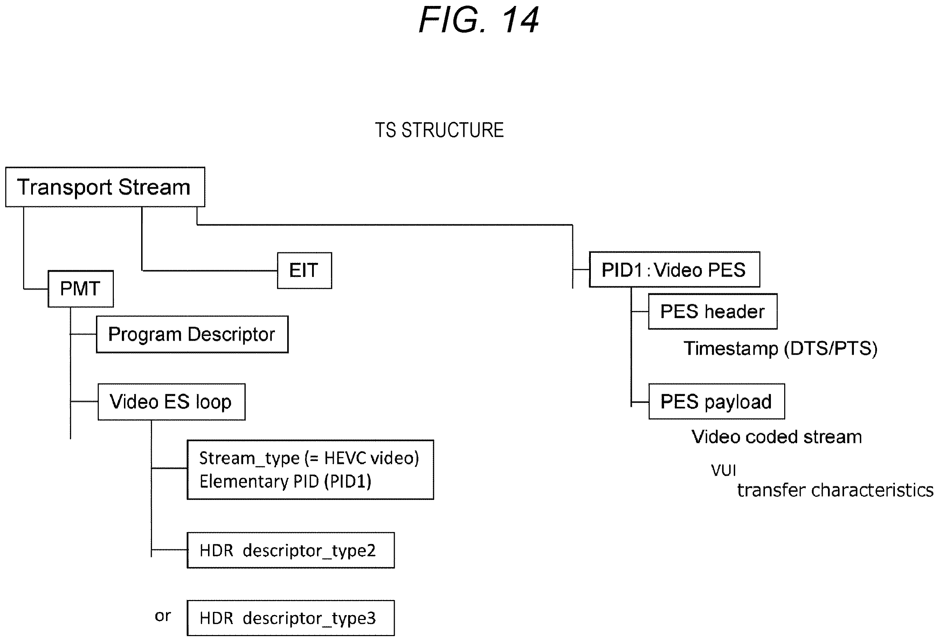

Fig. 14 illustrates an example of a structure of an MPEG-2 transport stream (TS structure). In this example structure, a PES packet "Video PES" of a video stream identified by PID1 is present. Meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS of an access unit.

The transport stream TS also includes a program map table (PMT) as program specific information (PSI). The PSI is information describing which program each of elementary streams contained in the transport stream belongs to. A program loop describing information related to the entire program is present in the PMT.

An elementary stream loop having information related to the elementary streams is present in the PMT. In this example structure, a video elementary stream loop (video ES loop) associated with the video stream is present. In the video elementary stream loop (video ES loop), information such as the stream type, a packet identifier (PID), and the like is arranged in association with the video stream, and a descriptor describing information related to the video stream is also arranged.

Assume that the value of "Stream_type" of the video stream is set to a value indicating an HEVC video stream, for example, and that the PID information indicates PID1 assigned to a PES packet "video PES" of the video stream. The descriptor of HDR descriptor_type2 or the descriptor of HDR descriptor_type3 described above is inserted as one of descriptors.

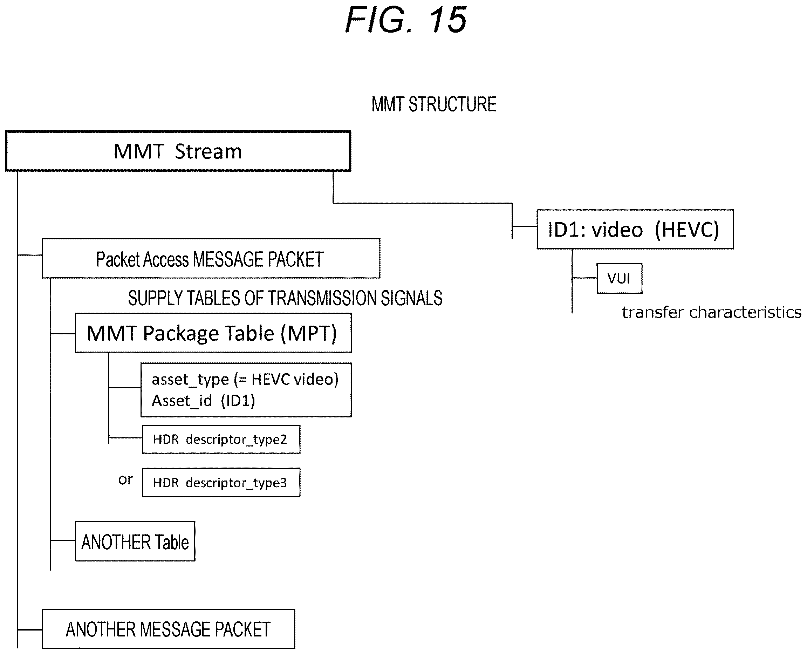

Fig. 15 illustrates an example of a structure of an MMT stream (MMT structure). MMT packets of assets such as MMT video and audio are present in an MMT stream. In the example structure illustrated in Fig. 9, an MMT packet of a video asset identified by ID1 is present. Meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS of an access unit.

In addition, message packets such as a packet access (PA) message packet are present in an MMT stream. A PA message packet contains a table such as an MMT packet table (MMT package table) . An MP table contains information on each asset. The descriptor of HDR descriptor_type2 or the descriptor of HDR descriptor_type3 described above is inserted.

Operation of the service transmission system 100B illustrated in Fig. 10 will be briefly explained. HDR video data Vh, which are a high-contrast camera output, are supplied to the HDR opto-electrical transfer unit 103. In the HDR opto-electrical transfer unit 103, opto-electrical conversion using the HDR opto-electrical transfer characteristic is performed on the HDR video data Vh, and HDR transmission video data (transmission video data having the HDR opto-electrical transfer characteristic) are obtained as video materials produced by the HDR OETF.

In addition, SDR video data Vs, which are a standard-contrast camera output, are supplied to the SDR opto-electrical transfer unit 104. In the SDR opto-electrical transfer unit 104, opto-electrical conversion using the SDR opto-electrical transfer characteristic is performed on the SDR video data Vs, SDR transmission video data (transmission video data having the SDR opto-electrical transfer characteristic) are obtained as video materials produced by the SDR OETF.

The SDR transmission video data obtained by the SDR opto-electrical transfer unit 104 are supplied to the dynamic range conversion unit 105. In the dynamic range conversion unit 105, dynamic range conversion is performed on the SDR transmission video data on the basis of the conversion information (conversion table, conversion coefficient) supplied from the control unit 101. The dynamic range conversion converts the SDR transmission video data into HDR transmission video data (transmission video data having the HDR opto-electrical transfer characteristic) (see Fig. 11).

In the switch 106B, transmission video data B (HDR transmission video data) obtained by the HDR opto-electrical transfer unit 103 or transmission video data C (HDR transmission video data) obtained by the dynamic range conversion unit 105 are selectively extracted under the control of the control unit 101. The thus extracted transmission video data are converted from the RGB domain to the YCbCr (luminance/chrominance) domain by the RGB/YCbCr conversion unit 107.

The transmission video data V1 resulting from the conversion to YCbCr domain are supplied to the video encoder 108. In the video encoder 108, encoding in MPEG4-AVC or HEVC, for example is performed on the transmission video data V1, encoded video data are obtained, and a video stream VS containing the encoded video data is generated. In this process, in the video encoder 108, meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS NAL unit of an access unit (AU).

The video stream VS obtained by the video encoder 108 is supplied to the container encoder 109. In the container encoder 109, a transport stream (an MPEG-2 transport stream or an MMT stream) containing the video stream VS generated by the video encoder 108 is generated. The transport stream is transmitted by transmission unit 110 on a broadcast wave or in a packet over a network to the service receiver 200.

For this process, in the container encoder 109, a descriptor (the descriptor of HDR descriptor_type2 (see Fig. 13) or the descriptor of HDR descriptor_type3 (see Fig. 6)) describing identification information representing the transmission video data B or the transmission video data C is inserted into the transport stream that is a container. In this case, in the container encoder 109, the identification information is inserted so that the identification information indicates the kind of transmission video data resulting from switching, from a timing that is a predetermined amount of time or longer before the switching timing.

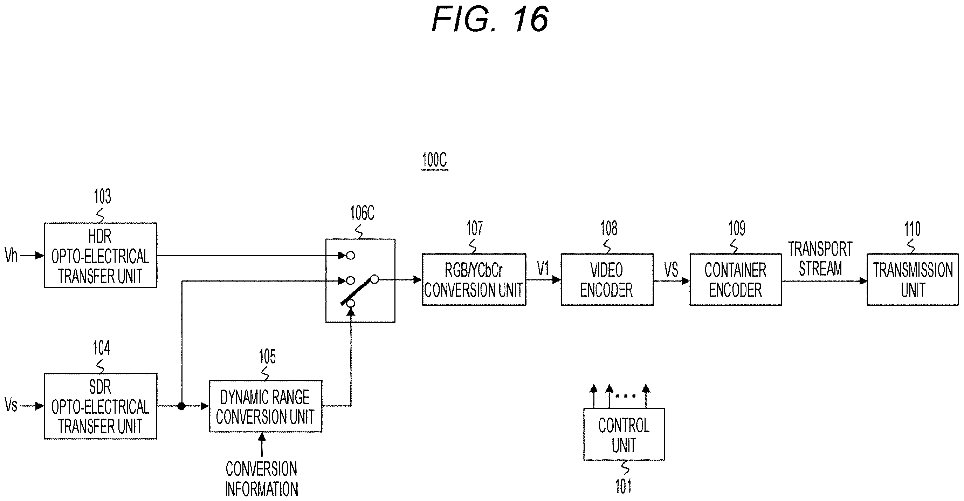

Fig. 16 illustrates an example configuration of a service transmission system 100C, which corresponds to the service transmission system 100 of Fig. 1. In Fig. 16, parts corresponding to those in Figs. 2 and 10 are designated by the same reference numerals, and detailed description thereof will not be repeated as appropriate. The service transmission system 100C includes a control unit 101, an HDR opto-electrical transfer unit 103, an SDR opto-electrical transfer unit 104, a dynamic range conversion unit 105, a switch 106C, an RGB/YCbCr conversion unit 107, a video encoder 108, a container encoder 109, and a transmission unit 110.

The control unit 101 includes a CPU, and controls operation of the respective units of the service transmission system 100C on the basis of control programs. The HDR opto-electrical transfer unit 103 performs opto-electrical conversion by applying an HDR opto-electrical transfer characteristic to a high-contrast camera output, that is, HDR video data Vh to obtain HDR transmission video data (transmission video data having the HDR opto-electrical transfer characteristic). The HDR transmission video data are video materials produced by the HDR OETF.

The SDR opto-electrical transfer unit 104 performs opto-electrical conversion by applying an SDR opto-electrical transfer characteristic to a standard-contrast camera output, that is, SDR video data Vs to obtain SDR transmission video data (transmission video data having the SDR opto-electrical transfer characteristic). The SDR transmission video data are video materials produced by the SDR OETF.

The dynamic range conversion unit 105 performs dynamic range conversion on the SDR transmission video data to obtain HDR transmission video data (transmission video data having the HDR opto-electrical transfer characteristic). Specifically, the dynamic range conversion unit 105 converts the SDR transmission video data that are video materials produced by the SDR OETF into HDR transmission video data.

The switch 106C selectively extracts SDR transmission video data (transmission video data A) obtained by the SDR opto-electrical transfer unit 104, HDR transmission video data (transmission video data B) obtained by the HDR opto-electrical transfer unit 103, or HDR transmission video data (transmission video data C) obtained by the dynamic range conversion unit 105.

The RGB/YCbCr conversion unit 107 converts transmission video data V1 extracted by the switch 106C from the RGB domain to the YCbCr (luminance/chrominance) domain. The video encoder 108 encodes the transmission video data V1, resulting from the conversion to the YCbCr domain by the RGB/YCbCr conversion unit 107, in MPEG4-AVC or HEVC, for example, to obtain encoded video data, and generates a video stream VS containing the encoded video data.

In this process, the video encoder 108 inserts meta-information, such as information indicating whether the video stream is an SDR stream or an HDR stream and information (transfer function) indicating an electro-optical transfer characteristic associated with the opto-electrical transfer characteristic of the transmission video data V1, into a region of VUI of an SPS NAL unit of an access unit (AU).

In this case, when the transmission video data V1 are the transmission video data A (the SDR transmission video data obtained by the SDR opto-electrical transfer unit 104), the opto-electrical transfer characteristic of the transmission video data V1 is the opto-electrical transfer characteristic of the SDR opto-electrical transfer unit 104. In addition, both when the transmission video data V1 are the transmission video data B (the HDR transmission video data obtained by the HDR opto-electrical transfer unit 104) and when the transmission video data V1 are the transmission video data C (the HDR transmission video data are obtained by the dynamic range conversion unit 105), the opto-electrical transfer characteristic of the transmission video data V1 is the opto-electrical transfer characteristic of the HDR opto-electrical transfer unit 103.

The container encoder 109 generates a transport stream (an MPEG-2 transport stream or an MMT stream) containing the video stream VS generated by the video encoder 108. The transmission unit 110 transmits the transport stream on a broadcast wave or in a packet over a network to the service receiver 200.

For this process, the container encoder 109 inserts identification information representing the transmission video data A, the transmission video data B, or the transmission video data C into the transport stream. In this case, the container encoder 109 inserts the identification information into the transport stream so that the identification information indicates the kind of transmission video data resulting from switching, from a timing that is a predetermined amount of time or longer before the switching timing (see Fig. 4). The insertion of the identification information is controlled in this manner allows the receiver side to be informed of dynamic switching of transmission video data.

The container encoder 109 inserts a dynamic range conversion descriptor (dynamic_range_conversion_descriptor), which describes identification information and which is newly defined, for example. The descriptor is inserted under a program map table when the transport stream is an MPEG-2 transport stream, or inserted under an MP table when the transport stream is an MMT stream, for example.

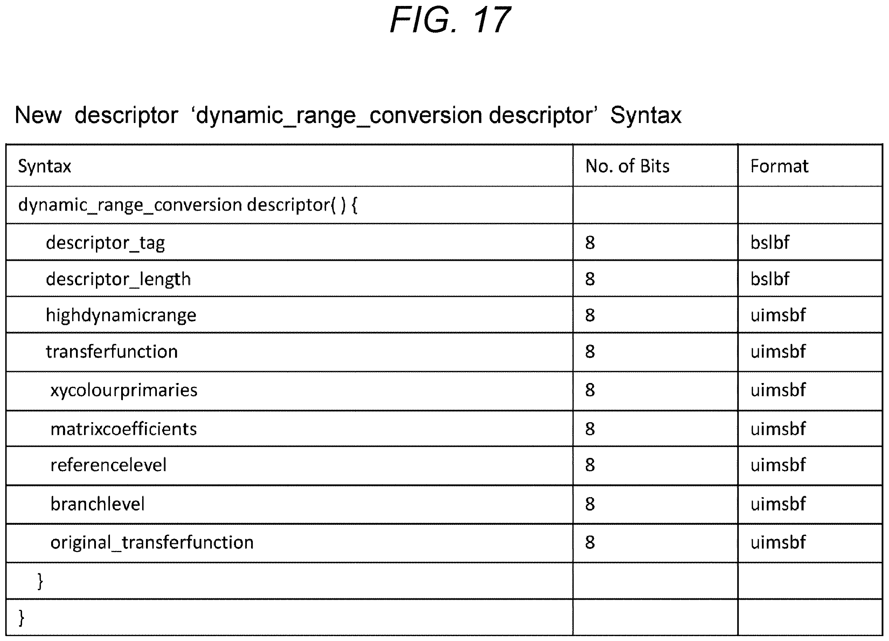

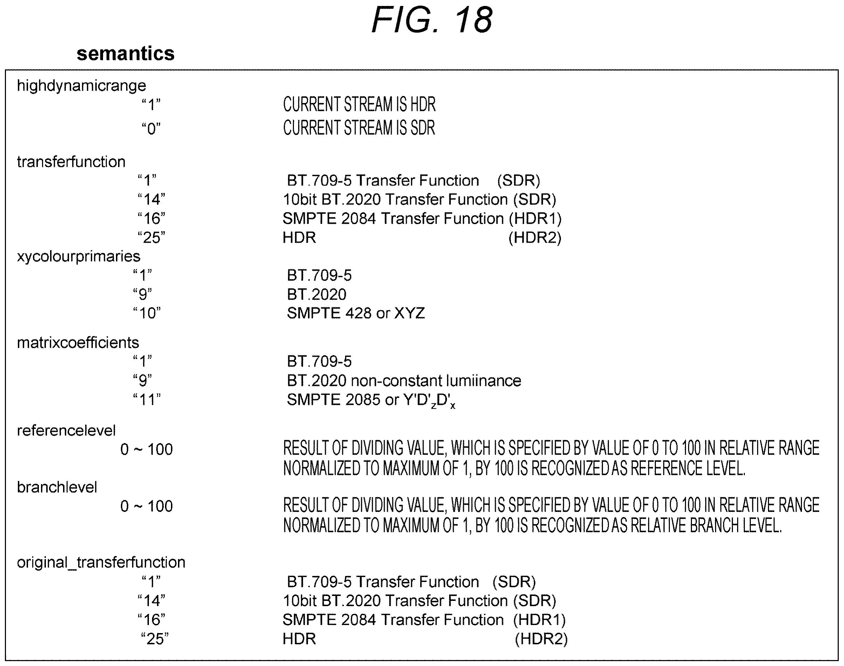

Fig. 17 shows an example structure (syntax) of the dynamic range conversion descriptor. Fig. 18 shows details (semantics) of major information in the example structure. An 8-bit field of "descriptor_tag" represents the type of the descriptor, which is the dynamic range conversion descriptor here. An 8-bit field of "descriptor_length" represents the length (size) of the descriptor, and indicates the number of subsequent bytes as the length of the descriptor.

An 8-bit field of "highdynamicrange" indicates that a current stream is an HDR stream or an SDR stream. "1" indicates that the current stream is an HDR stream, and "0" indicates that the current stream is an SDR stream. An 8-bit field of "transferfunction" represents an electro-optical transfer characteristic (EOTF characteristics). In other words, this field indicates an electro-optical transfer characteristic associated with the opto-electrical transfer characteristic (current electro-optical transfer characteristic) of the transmission video data V1. For example, "1" indicates "BT.709-5 transfer characteristic (SDR)," "14" indicates "10bitBT.2020 transfer characteristic (SDR)," "16" indicates "SMPTE 2084 transfer characteristic (HDR1)," and "25" indicates "HDR (HDR2) ." Note that "HDR (HDR2)" represents an HDR electro-optical transfer characteristic, which is not a PQ curve but is what is called hybrid gamma.

An 8-bit field of "xycolourprimaries" represents a color space. For example, "1" indicates "BT.709-5," "9" indicates "BT.2020," and "10" indicates "SMPTE 428 or XYZ." An 8-bit field of "matrixcoefficients" represents a color matrix coefficient. For example, "1" indicates "BT.709-5," "9" indicates "BT.2020 non-constant lumiinance," and "11" indicates "SMPTE 2085 or Y'D'zD'x."

An 8-bit field of "referencelevel" represents the reference level G (see Figs. 3 and 11). In this case, a value specified by a value of 0 to 100 in a relative range normalized to a maximum of "1" is described as the reference level G At the receiver side, a result of dividing the value by 100 is recognized as a normalized relative reference level. The relative reference level constitutes a conversion coefficient that is the conversion information for the dynamic range conversion.

An 8-bit field of "branchlevel" represents the branch level B (see Figs. 3 and 11). In this case, a value specified by a value of 0 to 100 in a relative range normalized to a maximum of "1" is described as the branch level B. At the receiver side, a result of dividing the value by 100 is recognized as the branch level.

An 8-bit field of "original_transferfunction" represents an original electro-optical transfer characteristic. "1" indicates "BT.709-5 transfer characteristic (SDR). " "14" indicates "10bit BT.2020 transfer characteristic (SDR)." "16" indicates "SMPTE 2084 transfer characteristic (HDR1)." "25" indicates "HDR (HDR2)."

In the descriptor of dynamic_range_conversion_descriptor, the information indicating whether the stream is HDR or SDR in the "highdynamicrange" field, the information indicating the current electro-optical transfer characteristic in the "transferfunction" field, and the information indicating the original electro-optical transfer characteristic in the "original_transferfunction" field indicate whether the transmission video data V1 are the transmission video data A, the transmission video data B, or the transmission video data C.

In a case where the transmission video data V1 are the transmission video data A, an SDR stream is indicated, and the current electro-optical transfer characteristic and the original electro-optical transfer characteristic indicate the same SDR electro-optical transfer characteristic. Alternatively, in a case where the transmission video data V1 are the transmission video data B, an HDR stream is indicated, and the electro-optical transfer characteristic and the current electro-optical transfer characteristic indicate the same HDR electro-optical transfer characteristic. Still alternatively, in a case where the transmission video data V1 are the transmission video data C, an HDR stream is indicated, the original electro-optical transfer characteristic indicates the SDR electro-optical transfer characteristic, but the current electro-optical transfer characteristic indicates the HDR electro-optical transfer characteristic.

Note that the descriptor of HDR descriptor_type3 (see Fig. 6) described above can be inserted instead of the dynamic range conversion descriptor. In the descriptor of HDR descriptor_type3, the information indicating whether the stream is HDR or SDR in the "HDR_SDR_flag" field and the information indicating whether the SDR characteristics are mapped on the HDR characteristics in the "SDR_mapping_type" field indicate the transmission video data A, the transmission video data B, or the transmission video data C.

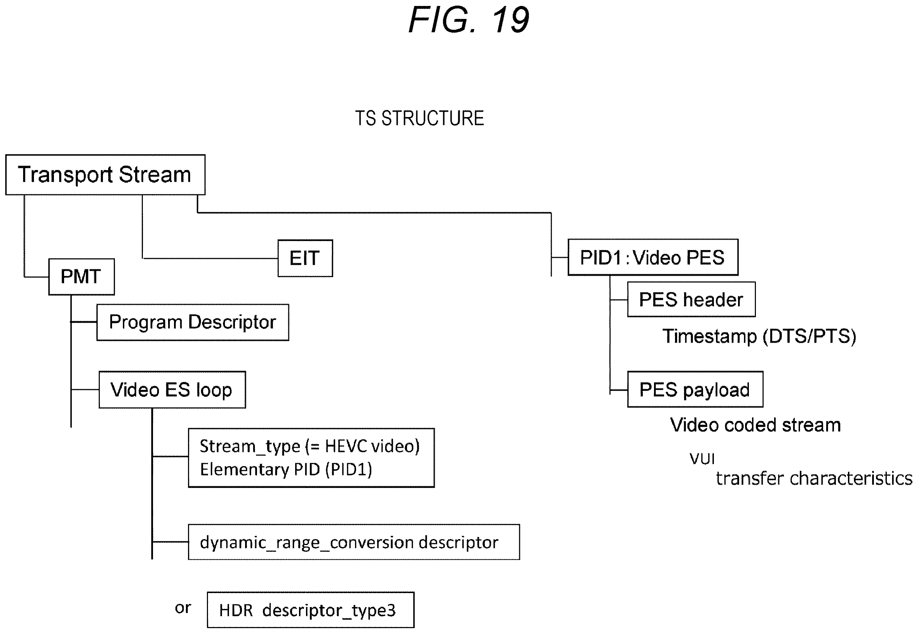

Fig. 19 illustrates an example of a structure of an MPEG-2 transport stream (TS structure). In this example structure, a PES packet "Video PES" of a video stream identified by PID1 is present. Meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS of an access unit.

The transport stream TS also includes a program map table (PMT) as program specific information (PSI). The PSI is information describing which program each of elementary streams contained in the transport stream belongs to. A program loop describing information related to the entire program is present in the PMT.

An elementary stream loop having information related to the elementary streams is present in the PMT. In this example structure, a video elementary stream loop (video ES loop) associated with the video stream is present. In the video elementary stream loop (video ES loop), information such as the stream type, a packet identifier (PID), and the like is arranged in association with the video stream, and a descriptor describing information related to the video stream is also arranged.

Assume that the value of "Stream_type" of the video stream is set to a value indicating an HEVC video stream, for example, and that the PID information indicates PID1 assigned to a PES packet "video PES" of the video stream. The dynamic range conversion descriptor or the descriptor of HDR descriptor_type3 described above is inserted as one of descriptors.

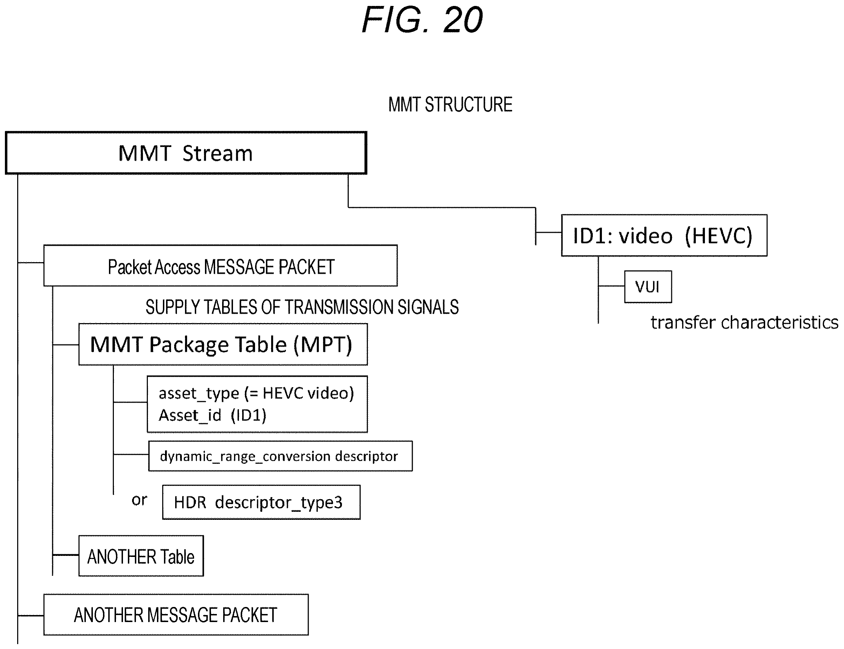

Fig. 20 illustrates an example of a structure of an MMT stream (MMT structure). MMT packets of assets such as MMT video and audio are present in an MMT stream. In the example structure illustrated in Fig. 9, an MMT packet of a video asset identified by ID1 is present. Meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS of an access unit.

In addition, message packets such as a packet access (PA) message packet are present in an MMT stream. A PA message packet contains a table such as an MMT packet table (MMT package table) . An MP table contains information on each asset. The dynamic range conversion descriptor or the descriptor of HDR descriptor_type3 described above is inserted.

Operation of the service transmission system 100C illustrated in Fig. 16 will be briefly explained. HDR video data Vh, which are a high-contrast camera output, are supplied to the HDR opto-electrical transfer unit 103. In the HDR opto-electrical transfer unit 103, opto-electrical conversion using the HDR opto-electrical transfer characteristic is performed on the HDR video data Vh, and HDR transmission video data (transmission video data having the HDR opto-electrical transfer characteristic) are obtained as video materials produced by the HDR OETF.

In addition, SDR video data Vs, which are a standard-contrast camera output, are supplied to the SDR opto-electrical transfer unit 104. In the SDR opto-electrical transfer unit 104, opto-electrical conversion using the SDR opto-electrical transfer characteristic is performed on the SDR video data Vs, SDR transmission video data (transmission video data having the SDR opto-electrical transfer characteristic) are obtained as video materials produced by the SDR OETF.

The SDR transmission video data obtained by the SDR opto-electrical transfer unit 104 are supplied to the dynamic range conversion unit 105. In the dynamic range conversion unit 105, dynamic range conversion is performed on the SDR transmission video data on the basis of the conversion information (conversion table, conversion coefficient) supplied from the control unit 101. The dynamic range conversion converts the SDR transmission video data into HDR transmission video data (transmission video data having the HDR opto-electrical transfer characteristic) (see Fig. 11).

In the switch 106C, transmission video data A (SDR transmission video data) obtained by the SDR opto-electrical transfer unit 104, transmission video data B (HDR transmission video data) obtained by the HDR opto-electrical transfer unit 103, or transmission video data C (HDR transmission video data) obtained by the dynamic range conversion unit 105 are selectively extracted under the control of the control unit 101. The thus extracted transmission video data are converted from the RGB domain to the YCbCr (luminance/chrominance) domain by the RGB/YCbCr conversion unit 107.

The transmission video data V1 resulting from the conversion to YCbCr domain are supplied to the video encoder 108. In the video encoder 108, encoding in MPEG4-AVC or HEVC, for example is performed on the transmission video data V1, encoded video data are obtained, and a video stream VS containing the encoded video data is generated. In this process, in the video encoder 108, meta-information, such as information indicating whether the video stream is an SDR stream or an HDR stream and information indicating an electro-optical transfer characteristic associated with the opto-electrical transfer characteristic of the transmission video data V1, is inserted into a region of VUI of an SPS NAL unit of an access unit (AU).

The video stream VS obtained by the video encoder 108 is supplied to the container encoder 109. In the container encoder 109, a transport stream (an MPEG-2 transport stream or an MMT stream) containing the video stream VS generated by the video encoder 108 is generated. The transport stream is transmitted by transmission unit 110 on a broadcast wave or in a packet over a network to the service receiver 200.

For this process, in the container encoder 109, a descriptor (the dynamic range conversion descriptor (see Fig. 17) or the descriptor of HDR descriptor_type3 (see Fig. 6)) describing identification information representing the transmission video data A, the transmission video data B, or the transmission video data C is inserted into the transport stream that is a container. In this case, in the container encoder 109, the identification information is inserted so that the identification information indicates the kind of transmission video data resulting from switching, from a timing that is a predetermined amount of time or longer before the switching timing.

"Example configuration of service receiver"

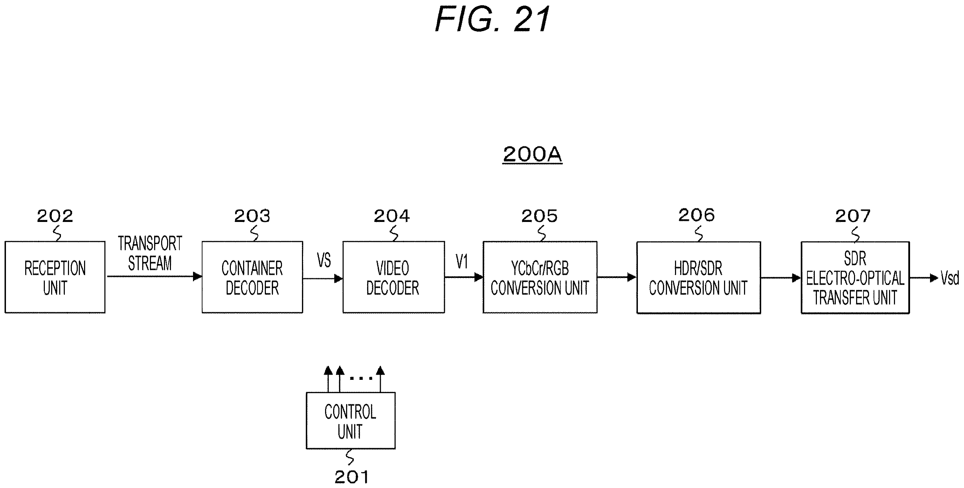

Fig. 21 illustrates an example configuration of a service receiver 200A, which corresponds to the service receiver 200 illustrated in Fig. 1. In the service receiver 200A, the displayperformance of a display monitor isinSDR. The service receiver 200A includes a control unit 201, a reception unit 202, a container decoder 203, a video decoder 204, a YCbCr/RGB conversion unit 205, an HDR/SDR conversion unit 206, and an SDR electro-optical transfer unit 207.

The control unit 201 includes a central processing unit (CPU), and controls operation of the respective units of the service receiver 200A on the basis of control programs. The reception unit 202 receives a transport stream (an MPEG-2 transport stream or an MMT stream) as a container transmitted from the service transmission system 100A (see Fig. 2), the service transmission system 100B (see Fig. 10), or the service transmission system 100C (see Fig. 16) on a broadcast wave or in a packet over a network. The container decoder 203 extracts a video stream VS from the transport stream.

In addition, the container decoder 203 extracts various kinds of information inserted in the transport stream, and sends the extracted information to the control unit 201. The information also includes the descriptor of HDR descriptor_type1 (see Fig. 5), the descriptor of HDR descriptor_type2 (see Fig. 13), the descriptor of HDR descriptor_type3 (see Fig. 6) or the dynamic range conversion descriptor (see Fig. 17) described above describing the identification information of the transmission video data.

The control unit 201 recognizes that the transmission video data included in the video stream Vs are the transmission video data A (SDR transmission video data), the transmission video data B (HDR transmission video data), or the transmission video data C (HDR transmission video data) on the basis of the description of the descriptor. As described above, the identification information of the transmission video data is inserted in the transport stream such that the identification information indicates the kind of transmission video data resulting from switching, from a timing that is predetermined amount of time or longer before the switching timing.

The control unit 201 is thus capable of recognizing that the kind of transmission video data will be switched and further recognizing the kind of transmission video data resulting from the switching, from the timing that is the predetermined amount of time or longer before the switching timing of the transmission video data. The control unit 201 is therefore capable of preparing for control of the respective units associated with the switching of the kind of transmission video data, and smoothly and appropriately performing a control process for obtaining image data for display from the transmission video data even when the kind of transmission video data is switched.

As described above, the transmission video data A are SDR transmission video data obtained by performing SDR opto-electrical conversion on SDR video data Vs. In addition, the transmission video data B are HDR transmission video data obtained by performing HDR opto-electrical conversion on HDR video data Vh. In addition, the transmission video data C are HDR transmission video data obtained by performing SDR opto-electrical conversion on SDR video data Vs and further performing dynamic range conversion on the resulting SDR transmission video data.

The video decoder 204 decodes the video stream VS extracted by the container decoder 203 to obtain the transmission video data V1. The video decoder 204 also extracts information, such as a parameter set and an SEI message, inserted in each access unit from the video stream VS, and sends the extracted information to the control unit 201. The information also includes meta-information inserted into a region of VUI of an SPS NAL unit of an access unit, such as information indicating whether the video stream is an SDR stream or an HDR stream, and information indicating an electro-optical transfer characteristic associated with the opto-electrical transfer characteristic of the transmission video data V1.

The YCbCr/RGB conversion unit 205 converts the transmission video data V1 obtained by the video decoder 204 from the YCbCr (luminance/chrominance) domain to the RGB domain. Note that the color space domain is not limited to the RGB domain, and that the luminance/chrominance domain is not limited to the YCbCr.

The HDR/SDR conversion unit 206 performs dynamic range conversion on the HDR transmission video data under the control of the control unit 201 to obtain SDR transmission video data. The HDR/SDR conversion unit 206 functions in a case where the transmission video data V1 are the transmission video data B or the transmission video data C, which are HDR transmission video data, or outputs the input without any change in a case where the transmission video data V1 are the transmission video data A, which are SDR transmission video data.

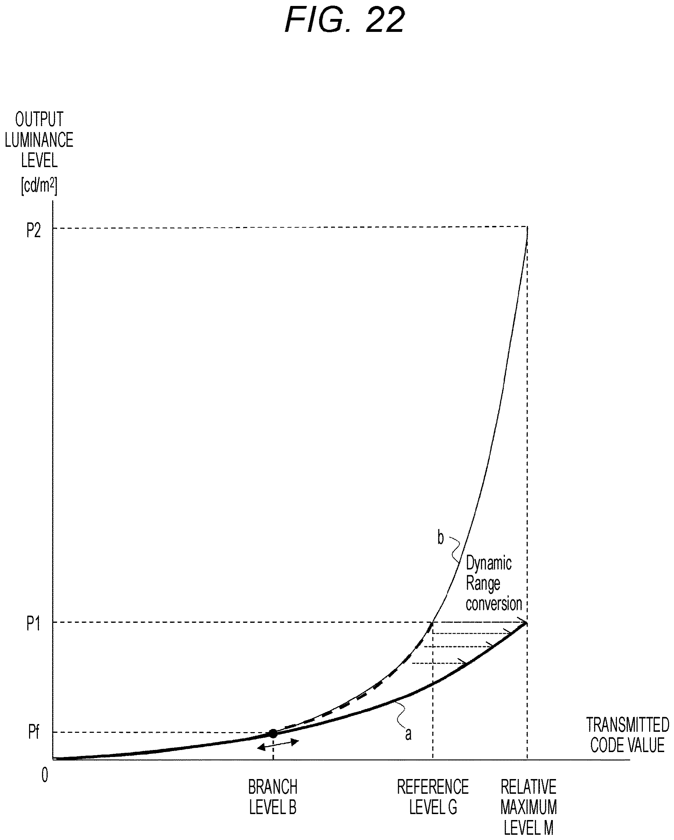

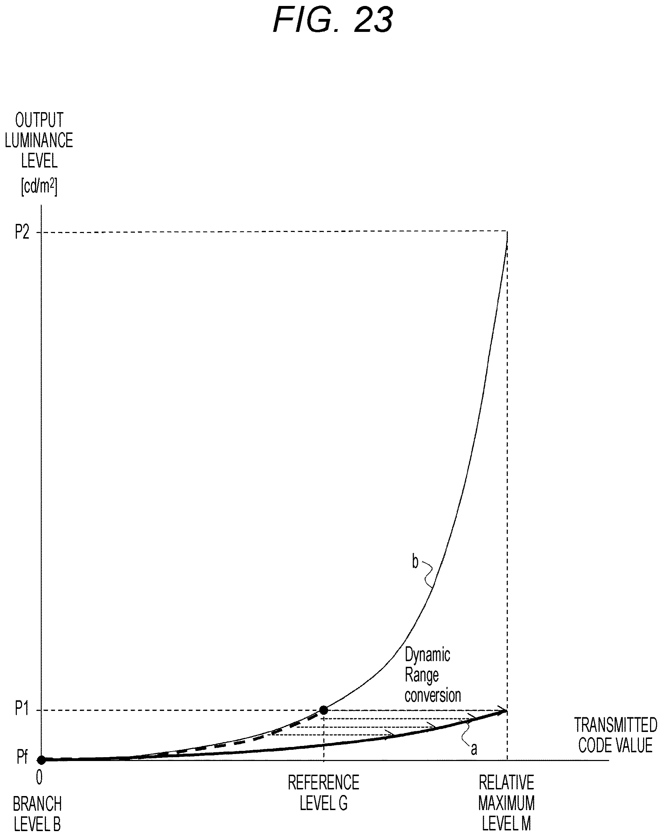

Details of the dynamic range conversion in a case where the transmission video data V1 are the transmission video data C (HDR transmission video data) will be explained with reference to Fig. 22. The vertical axis represents an output luminance level, which is associated with the horizontal axis of Fig. 11. In addition, the horizontal axis represents a transmitted code value, which is associated with the vertical axis of Fig. 11. A solid curve a is an SDR EOTF curve representing the SDR electro-optical transfer characteristic. The SDR EOTF curve is associated with the SDR OETF curve shown as the solid curve a in Fig. 11. A solid curve b is an HDR EOTF curve representing the HDR electro-optical transfer characteristic. The HDR EOTF curve is associated with the HDR OETF curve shown as the solid curve b in Fig. 11. Note that Fig. 23 shows an example of a case in which the branch level B is 0, which is associated with the example of Fig. 12.

The dynamic range conversion of the HDR/SDR conversion unit 206 is conversion reverse to that of the dynamic range conversion unit 105 in Fig. 10. Specifically, the dynamic range conversion is performed so that data at the branch level B or higher but the reference level G or lower among the HDR transmission video data are converted to have a value equal to that of data converted with the SDR opto-electrical transfer characteristic. In this case, the reference level G is made to be equal to the relative maximum level M that is the maximum SDR level. Note that input data not higher than the branch level B are output as output data without any change.

Note that the conversion information is in a form of a conversion table or a conversion coefficient provided by the control unit 201, for example. In a case where the conversion information is in a form of a conversion table, the HDR/SDR conversion unit 206 refers to the conversion table to perform the conversion. In a case where the conversion information is in a form of a conversion coefficient, the HDR/SDR conversion unit 206 performs the conversion by computation using the conversion coefficient. For example, when the conversion coefficient is represented by C, conversion is performed on the input data at the branch level B or higher but the reference level G or lower by the following expression (3) .

$$\text{Output data} = \text{branch level B} + (\text{input data} - \text{branch level B}) * 1/C$$
$$\cdots (3)$$

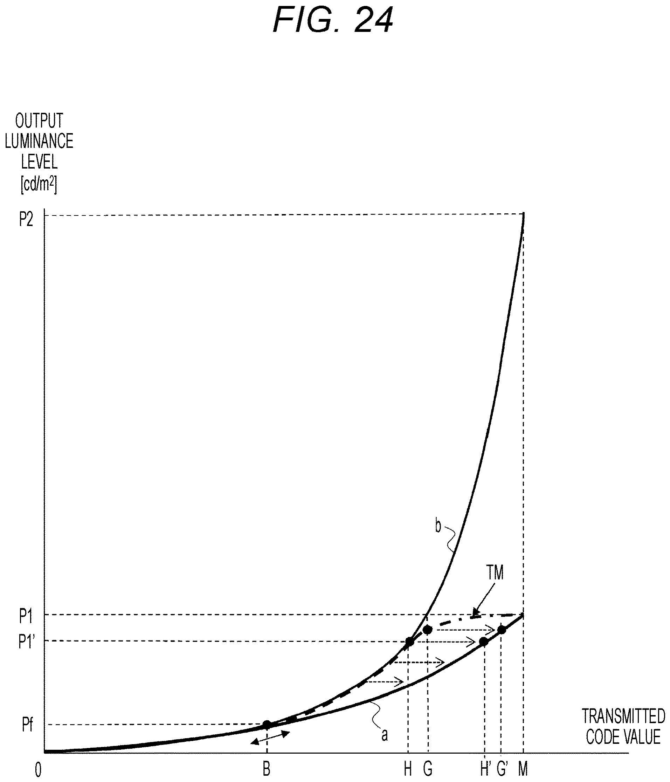

Next, details of the dynamic range conversion in a case where the transmission video data V1 are the transmission video data B (HDR transmission video data) will be explained with reference to Fig. 24. In this case, in the HDR/SDR conversion unit 206, an input level to the HDR EOTF curve is converted to an input level to the SDR EOTF curve. In Fig. 24, parts corresponding to those in Fig. 22 are designated by the same reference numerals. Note that P1' represents an output luminance level associated with a predetermined level H lower than the reference level G.

In this case, for input data up to a predetermined level H lower than the reference level G, the dynamic range conversion in the HDR/SDR conversion unit 207 is conversion similar to that in the case where the transmission video data V1 are the transmission video data C (HDR transmission video data) described above. Then, for input data from the level H to the level M, level conversion based on tone mapping characteristics TM shown by a dashed-dotted line is performed and output data are obtained. In this case, the level H is converted to a level H', the reference level G is converted to a level G', and the level M remains unchanged, for example.

The level conversion based on the tone mapping characteristics TM for input data from the level H to the level M in this manner allows reduction in image quality degradation due to level saturation for input data in the range from the reference level G to the relative maximum level M.

The description refers back to Fig. 21, in which the SDR electro-optical transfer unit 207 applies the SDR electro-optical transfer characteristic to the SDR transmission video data output from the HDR/SDR conversion unit 206 to obtain video data Vsd for display to display an SDR image.

Operation of the service receiver 200A illustrated in Fig. 21 will be briefly explained. In the reception unit 202, a transport stream (an MPEG-2 transport stream or an MMT stream) transmitted from the service transmission system 100A, the service transmission system 100B, or the service transmission system 100C on a broadcast wave or in a packet over a network is received. The transport stream is supplied to the container decoder 203. In the container decoder 203, a video stream VS is extracted from the transport stream.

In addition, in the container decoder 203, various kinds of information inserted in the transport stream that is a container is extracted and sent to the control unit 201. The information also includes the descriptor of HDR descriptor_type1 (see Fig. 5), the descriptor of HDR descriptor_type2 (see Fig. 13), the descriptor of HDR descriptor_type3 (see Fig. 6) or the dynamic range conversion descriptor (see Fig. 17) described above.

In the control unit 201, it is recognized whether the transmission video data included in the video stream Vs are the transmission video data A (SDR transmission video data), the transmission video data B (HDR transmission video data), or the transmission video data C (HDR transmission video data) on the basis of the description of the descriptor.

The video stream VS extracted by the container decoder 203 is supplied to the video decoder 204. In the video decoder 204, the video stream VS is decoded, and the transmission video data V1 are obtained. In addition, in the video decoder 204, information, such as a parameter set and an SEI message, inserted in each access unit is extracted from the video stream VS and sent to the control unit 201.

The transmission video data V1 obtained by the video decoder 204 is converted from the YCbCr (luminance/chrominance) domain to the RGB domain by the YCbCr/RGB conversion unit 205. The transmission video data V1 resulting from the conversion to the RGB domain are supplied to the HDR/SDR conversion unit 206.

In the HDR/SDR conversion unit 206, in a case where the transmission video data V1 are the transmission video data B or the transmission video data C, which are HDR transmission video data, the dynamic range conversion is performed on the HDR transmission video data, and SDR transmission video data are obtained (see Figs. 22 to 24). Note that, in a case where the transmission video data V1 are the transmission video data A, which are SDR transmission video data, the input is output without any change.

The SDR transmission video data obtained by the HDR/SDR conversion unit 206 are supplied to the SDR electro-optical transfer unit 207. In the SDR electro-optical transfer unit 207, the SDR electro-optical transfer characteristic is applied to the SDR transmission video data, and video data Vsd for display of an SDR image are obtained. The video data Vsd for display is subjected to a display mapping process depending on the display capability of a display monitor where necessary, and then supplied to the display monitor for display of the SDR image.

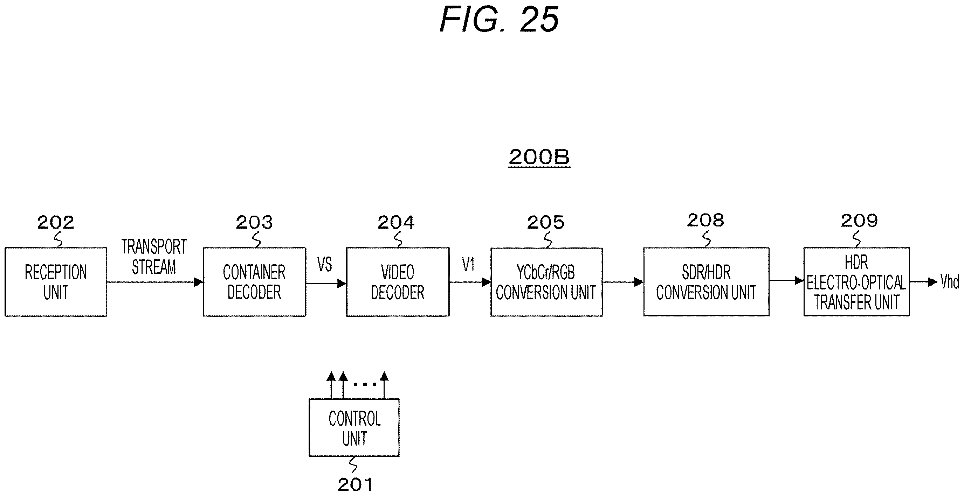

Fig. 25 illustrates an example configuration of a service receiver 200B, which corresponds to the service receiver 200 illustrated in Fig. 1. In Fig. 25, parts corresponding to those in Fig. 21 are designated by the same reference numerals, and detailed description thereof will not be repeated as appropriate. In the service receiver 200B, the display performance of the display monitor is in HDR. The service receiver 200B includes a control unit 201, a reception unit 202, a container decoder 203, a video decoder 204, a YCbCr/RGB conversion unit 205, an SDR/HDR conversion unit 208, and an HDR electro-optical transfer unit 209.

The control unit 201 includes a CPU, and controls operation of the respective units of the service receiver 200B on the basis of control programs. The reception unit 202 receives a transport stream (an MPEG-2 transport stream or an MMT stream) as a container transmitted from the service transmission system 100A (seeFig. 2), the service transmission system 100B (see Fig. 10), or the service transmission system 100C (see Fig. 16) on a broadcast wave or in a packet over a network. The container decoder 203 extracts a video stream VS from the transport stream.

In addition, the container decoder 203 extracts various kinds of information inserted in the transport stream, and sends the extracted information to the control unit 201. The information also includes the descriptor of HDR descriptor_type1 (see Fig. 5), the descriptor of HDR descriptor_type2 (see Fig. 13), the descriptor of HDR descriptor_type3 (see Fig. 6) or the dynamic range conversion descriptor (see Fig. 17) described above.

The control unit 201 recognizes whether the transmission video data included in the video stream Vs are the transmission video data A (SDR transmission video data), the transmission video data B (HDR transmission video data), or the transmission video data C (HDR transmission video data) on the basis of the description of the descriptor. In this case, the control unit 201 is capable of recognizing that the kind of transmission video data will be switched and further recognizing the kind of transmission video data resulting from the switching, from the timing that is a predetermined amount of time or longer before the switching timing of the transmission video data.

The video decoder 204 decodes the video stream VS extracted by the container decoder 203 to obtain the transmission video data V1. The YCbCr/RGB conversion unit 205 converts the transmission video data V1 obtained by the video decoder 204 from the YCbCr (luminance/chrominance) domain to the RGB domain.

The SDR/HDR conversion unit 208 performs dynamic range conversion on the SDR transmission video data under the control of the control unit 201 to obtain HDR transmission video data. The SDR/HDR conversion unit 206 functions in a case where the transmission video data V1 are the transmission video data A, which are SDR transmission video data, or outputs the input without any change in a case where the transmission video data V1 are the transmission video data B or the transmission video data C, which are HDR transmission video data.

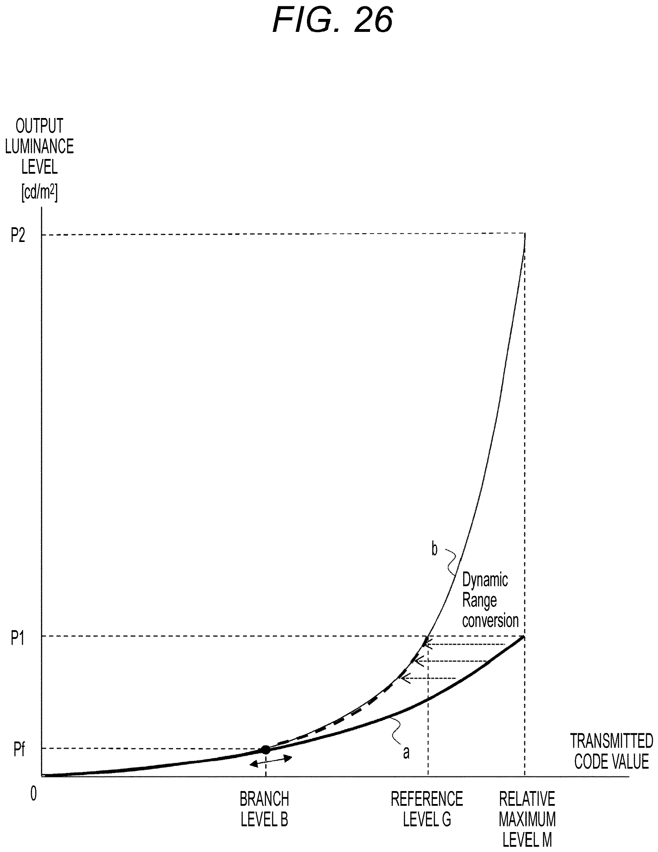

Details of the dynamic range conversion in a case where the transmission video data V1 are the transmission video data A (SDR transmission video data) will be explained with reference to Fig. 26. In this case, in the SDR/HDR conversion unit 208, an input level to the SDR EOTF curve is converted to an input level to the HDR EOTF curve. In Fig. 26, parts corresponding to those in Fig. 22 are designated by the same reference numerals.

The dynamic range conversion of the SDR/HDR conversion unit 208 is conversion similar to that of the dynamic range conversion unit 105 in Figs. 10 and 16. Specifically, the dynamic range conversion is performed so that data at the branch level B or higher but the relative maximum level M, which is the maximum SDR level, or lower among the SDR transmission video data are converted to have a value equal to that of data converted with the HDR opto-electrical transfer characteristic. In this case, the relative maximum level M is made to be equal to the reference level G. Note that input data not higher than the branch level B are output as output data without any change.

The description refers back to Fig. 25, in which the HDR opto-electrical transfer unit 209 applies the HDR electro-optical transfer characteristic to the HDR transmission video data output from the HDR/SDR conversion unit 208 to obtain video data Vhd for display to display an HDR image.

Operation of the service receiver 200B illustrated in Fig. 25 will be briefly explained. In the reception unit 202, a transport stream (an MPEG-2 transport stream or an MMT stream) transmitted from the service transmission system 100A, the service transmission system 100B, or the service transmission system 100C on a broadcast wave or in a packet over a network is received. The transport stream is supplied to the container decoder 203. In the container decoder 203, a video stream VS is extracted from the transport stream.

In addition, in the container decoder 203, various kinds of information inserted in the transport stream that is a container is extracted and sent to the control unit 201. The information also includes the descriptor of HDR descriptor_type1 (see Fig. 5), the descriptor of HDR descriptor_type2 (see Fig. 13), the descriptor of HDR descriptor_type3 (see Fig. 6) or the dynamic range conversion descriptor (see Fig. 17) described above.

In the control unit 201, it is recognized whether the transmission video data included in the video stream Vs are the transmission video data A (SDR transmission video data), the transmission video data B (HDR transmission video data), or the transmission video data C (HDR transmission video data) on the basis of the description of the descriptor.

The video stream VS extracted by the container decoder 203 is supplied to the video decoder 204. In the video decoder 204, the video stream VS is decoded, and the transmission video data V1 are obtained. In addition, in the video decoder 204, information, such as a parameter set and an SEI message, inserted in each access unit is extracted from the video stream VS and sent to the control unit 201.

The transmission video data V1 obtained by the video decoder 204 is converted from the YCbCr (luminance/chrominance) domain to the RGB domain by the YCbCr/RGB conversion unit 205. The transmission video data V1 resulting from the conversion to the RGB domain are supplied to the SDR/HDR conversion unit 206.

In the SDR/HDR conversion unit 208, in a case where the transmission video data V1 are the transmission video data A, which are SDR transmission video data, the dynamic range conversion is performed on the SDR transmission video data, and HDR transmission video data are obtained (see Fig. 26) . Note that, in a case where the transmission video data V1 are the transmission video data B or the transmission video data C, which are HDR transmission video data, the input is output without any change.

The HDR transmission video data obtained by the SDR/HDR conversion unit 208 are supplied to the HDR electro-optical transfer unit 209. In the HDR electro-optical transfer unit 209, the HDR electro-optical transfer characteristic is applied to the HDR transmission video data, and video data Vhd for display of an HDR image are obtained. The video data Vhd for display is subjected to a display mapping process depending on the display capability of a display monitor where necessary, and then supplied to the display monitor for display of the HDR image.

As described above, in the transmission/reception system 10 illustrated in Fig. 1, the service transmission system 100 inserts, into a transport stream that is a container, identification information representing the kind of transmission video data contained in a video stream Vs included in the transport stream, such that the identification information indicates the kind of transmission video data resulting from the switching, from a timing that is a predetermined amount of time or longer before the switching timing.

This allows the service receiver 200 to recognize that the kind of transmission video data will be switched and further recognize the kind of transmission video data resulting from the switching, from the timing that is a predetermined amount of time or longer before the switching timing of the transmission video data. This therefore enables the service receiver 200 to prepare for control of the respective units associated with the switching of the kind of transmission video data, and smoothly and appropriately perform a control process for obtaining image data for display from the transmission video data even when the kind of transmission video data is switched.

<2. Modifications>

Note that, while the transmission/reception system 10 constituted by the service transmission system 100 and the service receiver 200 has been presented in the embodiment described above, the configuration of a transmission/reception system to which the present technology is applicable is not limited to the above. For example, the service receiver 200 may have a configuration including a set-top box (STB) and a monitor connected via a digital interface such as a high-definition multimedia interface (HDMI). Note that "HDMI" is a registered trademark.

Furthermore, an example in which information such as the reference level and the branch level is also inserted with the identification information of transmission image data into a transport stream that is a container before transmission has been presented in the embodiment described above. In a case where the value of the information such as the reference level and the branch level is uniquely obtained through reference to the opto-electrical transfer characteristic, however, the identification information of the opto-electrical transfer characteristic can be used as a substitute for the level value without transmission of the level value itself. In this case, the identification information for an opto-electrical transfer characteristic may be supplied by a container or by a video stream.

A Major feature of the present technology is that identification information representing a kind of transmission video data included in a video stream contained in a container is inserted into the container such that the identification information indicates the kind of transmission video data resulting from switching, from a timing that is a predetermined amount of time or longer before the switching timing, which allows a receiver side to smoothly and appropriately perform a process for obtaining image data for display from the transmission video data even when the kind of transmission video data is switched (see Figs. 4 and 8) .

REFERENCE SIGNS LIST

| | |
|---|---|
| 10 | Transmission/reception system |
| 100, 100A, 100B, 100C | Service transmission system |
| 101 | Control unit |
| 103 | HDR opto-electrical transfer unit |
| 104 | SDR opto-electrical transfer unit |
| 105 | Dynamic range conversion unit |
| 106A, 106B, 106C | Switch |
| 107 | RGB/YCbCr conversion unit |
| 108 | Video encoder |
| 109 | Container encoder |
| 110 | Transmission unit |
| 200, 200A, 200B | Service receiver |
| 201 | Control unit |
| 202 | Reception unit |
| 203 | Container decoder |
| 204 | Video decoder |
| 205 | YCbCr/RGB conversion unit |
| 206 | HDR/SDR conversion unit |
| 207 | SDR electro-optical transfer unit |
| 208 | SDR/HDR conversion unit |
| 209 | HDR electro-optical transfer unit |

**Claims**

1. A transmission device comprising:

    an encoding unit (108) configured to encode transmission video data obtained by switching between a plurality of kinds of transmission video data having predetermined opto-electrical transfer characteristics to obtain a video stream;
    a transmission unit (110) configured to transmit a container in a predetermined format containing the video stream; and
    an information insertion unit (101, 109) configured to insert, into the container, identification information representing a kind of a transmission video data in the video stream contained in the container, such that the identification information indicates the kind of transmission video data resulting from switching, from a timing a predetermined amount of time or longer before a timing of the switching.

2. The transmission device according to claim 1, wherein the plurality of kinds of transmission video data include:

    first transmission video data having a standard dynamic range opto-electrical transfer characteristic, the first transmission video data being obtained by performing opto-electrical conversion with the standard dynamic range opto-electrical transfer characteristic on standard dynamic range video data; and
    second transmission video data having a high dynamic range opto-electrical transfer characteristic, the second transmission video data being obtained by performing opto-electrical conversion with the high dynamic range opto-electrical transfer characteristic on high dynamic range video data.

3. The transmission device according to claim 1, wherein the plurality of kinds of transmission video data include:

first transmission video data having a high dynamic range opto-electrical transfer characteristic, the first transmission video data being obtained by performing opto-electrical conversion with the high dynamic range opto-electrical transfer characteristic on high dynamic range video data; and
second transmission video data having a high dynamic range opto-electrical transfer characteristic, the second transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converged with the standard dynamic range opto-electrical transfer characteristic into a value of data converted with the high dynamic range opto-electrical transfer characteristic.

4. The transmission device according to claim 1, wherein the plurality of kinds of transmission video data include:

first transmission video data having a standard dynamic range opto-electrical transfer characteristic, the first transmission video data being obtained by performing opto-electrical conversion with the standard dynamic range opto-electrical transfer characteristic on standard dynamic range video data;
second transmission video data having a high dynamic range opto-electrical transfer characteristic, the second transmission video data being obtained by performing opto-electrical conversion with the high dynamic range opto-electrical transfer characteristic on high dynamic range video data; and
third transmission video data having a high dynamic range opto-electrical transfer characteristic, the third transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converged with the standard dynamic range opto-electrical transfer characteristic into a value of data converted with the high dynamic range opto-electrical transfer characteristic.

5. The transmission device according to claim 1, wherein the information insertion unit (101, 109) further inserts, into the container, information on a reference level being a reference luminance level or information on branch level being a luminance level at which a trajectory followed by curves of a standard dynamic range opto-electrical transfer characteristic and a high dynamic range opto-electrical transfer characteristic bifurcates.

6. The transmission device according to claim 1, wherein the container is an MPEG-2 transport stream or an MMT stream.

7. A transmission method comprising:

an encoding step of encoding transmission video data obtained by switching between a plurality of kinds of transmission video data having predetermined opto-electrical transfer characteristics to obtain a video stream;
a transmitting step of transmitting, by a transmission unit, a container in a predetermined format containing the video stream; and
an information inserting step of inserting, into the container, identification information representing a kind of a transmission video data in the video stream contained in the container, such that the identification information indicates the kind of transmission video data resulting from switching, from a timing a predetermined amount of time or longer before a timing of the switching.

8. A reception device comprising:

a reception unit (202) configured to receive a container in a predetermined format containing a video stream obtained by encoding transmission video data, wherein
the transmission video data is an output of switching between a plurality of kinds of transmission video data having predetermined opto-electrical transfer characteristics,
in the container, identification information representing a kind of transmission video data of the video stream contained by the container is inserted such that the identification information indicates the kind of transmission video data resulting from switching, from a timing a predetermined amount of time or longer before a timing of the switching, and
the reception device further comprises:

    a decoding unit (204)configured to decode the video stream to obtain transmission video data; and
    a processing unit (207) configured to perform an electro-optical conversion process based on the identification information and display performance on the transmission video data obtained by the decoding unit, to obtain image data for display.

9. The reception device according to claim 8, wherein
the plurality of kinds of transmission video data include:

    first transmission video data having a standard dynamic range opto-electrical transfer characteristic, the first transmission video data being obtained by performing opto-electrical conversion with the standard dynamic range opto-electrical transfer characteristic on standard dynamic range video data; and second transmission video data having a high dynamic range opto-electrical transfer characteristic, the second transmission video data being obtained by performing opto-electrical conversion with the high dynamic range opto-electrical transfer characteristic on high dynamic range video data,
when the display performance is in a high dynamic range and:

    in a case where the transmission video data are the first transmission video data, the processing unit performs dynamic range conversion on the transmission video data and then performs an electro-optical conversion process with the high dynamic range electro-optical transfer characteristic on the resulting transmission video data to obtain the image data for display, or in a case where the transmission video data are the second transmission video data, the processing unit performs electro-optical conversion with the high dynamic range electro-optical transfer characteristic on the transmission video data to obtain the image data for display, and
when the display performance is in a standard dynamic range and:
in a case where the transmission video data are the first transmission video data, the processing unit performs electro-optical conversion with a standard dynamic range electro-optical transfer characteristic on the transmission video data to obtain the image data for display, or in a case where the transmission video data are the second transmission video data, the processing unit performs dynamic range conversion on the transmission video data and then performs electro-optical conversion with a standard dynamic range electro-optical transfer characteristic on the resulting transmission video data to obtain the image data for display.

10. The reception device according to claim 8, wherein
the plurality of kinds of transmission video data include: first transmission video data having a high dynamic range opto-electrical transfer characteristic, the first transmission video data being obtained by performing opto-electrical conversion with the high dynamic range opto-electrical transfer characteristic on high dynamic range video data; and second transmission video data having a high dynamic range opto-electrical transfer characteristic, the second transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converted with the standard dynamic range opto-electrical transfer characteristic into a value of data converted with the high dynamic range opto-electrical transfer characteristic,
when the display performance is in a high dynamic range and:

    in a case where the transmission video data are either of the first transmission video data and the second transmission video data, the processing unit performs electro-optical conversion with the high dynamic range electro-optical transfer characteristic on the transmission video data to obtain the image data for display, and
when the display performance is in a standard dynamic range and:
in a case where the transmission video data are the first transmission video data, the processing unit performs dynamic range conversion with a first conversion characteristic on the transmission video data and then performs electro-optical conversion with the standard dynamic range electro-optical transfer characteristic on the resulting transmission video data to obtain the image data for display, or in a case where the transmission video data are the second transmission video data, the processing unit performs dynamic range conversion with a second conversion characteristic on the transmission video data and then performs electro-optical conversion with a standard dynamic range electro-optical transfer characteristic on the resulting transmission video data to obtain the image data for display.

**11.** The reception device according to claim 8, wherein
the plurality of kinds of transmission video data include: first transmission video data having a standard dynamic range opto-electrical transfer characteristic, the first transmission video data being obtained by performing opto-electrical conversion with the standard dynamic range opto-electrical transfer characteristic on standard dynamic range video data; second transmission video data having a high dynamic range opto-electrical transfer characteristic, the second transmission video data being obtained by performing opto-electrical conversion with the high dynamic range opto-electrical transfer characteristic on high dynamic range video data; and third transmission video data having a high dynamic range opto-electrical transfer characteristic, the third transmission video data being obtained by performing opto-electrical conversion with a standard dynamic range opto-electrical transfer characteristic on standard dynamic range video data and performing dynamic range conversion on the video data resulting from the opto-electrical conversion, the dynamic range conversion being based on conversion information for converting a value of data converted with the standard dynamic range opto-electrical transfer characteristic into a value of data converted with the high dynamic range opto-electrical transfer characteristic,
when the display performance is in a high dynamic range and:

in a case where the transmission video data are the first transmission video data, the processing unit performs dynamic range conversion on the transmission video data and then performs electro-optical conversion with a high dynamic range electro-optical transfer characteristic on the resulting transmission video data to obtain the image data for display, or in a case where the transmission video data are the second transmission video data or the third transmission video data, the processing unit performs electro-optical conversion with a high dynamic range electro-optical transfer characteristic on the transmission video data to obtain the image data for display, and

when the display performance is in a standard dynamic range and:
in a case where the transmission video data are the first transmission video data, the processing unit performs electro-optical conversion with a standard dynamic range electro-optical transfer characteristic on the transmission video data to obtain the image data for display, in a case where the transmission video data are the second transmission video data, the processing unit performs dynamic range conversion with a first conversion characteristic on the transmission video data and then performs electro-optical conversion with a standard dynamic range electro-optical transfer characteristic on the resulting transmission video data to obtain the image data for display, or in a case where the transmission video data are the third transmission video data, the processing unit performs dynamic range conversion with a second conversion characteristic on the transmission video data and then performs electro-optical conversion with a standard dynamic range electro-optical transfer characteristic on the resulting transmission video data to obtain the image data for display.

**12.** A reception method comprising:

a receiving step of receiving, by a reception unit, a container in a predetermined format containing a video stream obtained by encoding transmission video data, wherein
the transmission video data is an output of switching between a plurality of kinds of transmission video data having predetermined opto-electrical transfer characteristics, and
in the container, identification information representing a kind of transmission video data of the video stream contained by the container is inserted such that the identification information indicates the kind of transmission video data resulting from switching, from a timing a predetermined amount of time or longer before a timing of the switching,
the reception method further comprising:

a decoding step of decoding the video stream to obtain transmission video data; and
a processing step of performing an electro-optical conversion process based on the identification information and display performance on the transmission video data obtained by the decoding step, to obtain image data for display.

**Patentansprüche**

1. Sendevorrichtung, die Folgendes umfasst:

    eine Codiereinheit (108), ausgelegt zum Codieren von Sendevideodaten, die durch Umschalten zwischen mehreren Arten von Sendevideodaten, die vorbestimmte optoelektrische Übertragungscharakteristika aufweisen, erhalten werden, um einen Videostrom zu erhalten;
    eine Sendeeinheit (110), ausgelegt zum Senden eines Behälters in einem vorbestimmten Format, der den Videostrom enthält; und
    eine Informationeneinsetzeinheit (101, 109), ausgelegt zum Einsetzen, in den Behälter, von Identifikationsinformationen, die eine Art von Sendevideodaten in dem in dem Behälter enthaltenen Videostrom repräsentieren, so dass die Identifikationsinformationen die Art der Sendevideodaten, die aus dem Umschalten resultiert, angeben, von einem Timing einer vorbestimmten Zeitdauer oder länger vor einem Timing des Umschaltens.

2. Sendevorrichtung nach Anspruch 1, wobei die mehreren Arten von Sendevideodaten die folgenden beinhalten:

    erste Sendevideodaten, die eine optoelektrische Standarddynamikbereich-Übertragungscharakteristik aufweisen, wobei die ersten Sendevideodaten durch Durchführen von optoelektrischer Umwandlung mit der optoelektrischen Standarddynamikbereich-Übertragungscharakteristik an Standarddynamikbereich-Videodaten erhalten werden; und
    zweite Sendevideodaten, die eine optoelektrische Hochdynamikbereich-Übertragungscharakteristik aufweisen, wobei die zweiten Sendevideodaten durch Durchführen von optoelektrischer Umwandlung mit der optoelektrischen Hochdynamikbereich-Übertragungscharakteristik an Hochdynamikbereich-Videodaten erhalten werden.

3. Sendevorrichtung nach Anspruch 1, wobei die mehreren Arten von Sendevideodaten die folgenden beinhalten:

    erste Sendevideodaten, die eine optoelektrische Hochdynamikbereich-Übertragungscharakteristik aufweisen, wobei die ersten Sendevideodaten durch Durchführen von optoelektrischer Umwandlung mit der optoelektrischen Hochdynamikbereich-Übertragungscharakteristik an Hochdynamikbereich-Videodaten erhalten werden; und
    zweite Sendevideodaten, die eine optoelektrische Hochdynamikbereich-Übertragungscharakteristik aufweisen, wobei die zweiten Sendevideodaten durch Durchführen von optoelektrischer Umwandlung mit einer optoelektrischen Standarddynamikbereich-Übertragungscharakteristik an Standarddynamikbereich-Videodaten und Durchführen von Dynamikbereichsumwandlung an den Videodaten, die aus der optoelektrischen Umwandlung resultieren, erhalten werden, wobei die Dynamikbereichsumwandlung auf Umwandlungsinformationen zum Umwandeln eines Werts von Daten, die mit der optoelektrischen Standarddynamikbereich-Übertragungscharakteristik umgewandelt wurden, in einen Wert von Daten, die mit der optoelektrischen Hochdynamikbereich-Übertragungscharakteristik umgewandelt wurden, basiert.

4. Sendevorrichtung nach Anspruch 1, wobei die mehreren Arten von Sendevideodaten die folgenden beinhalten:

    erste Sendevideodaten, die eine optoelektrische Standarddynamikbereich-Übertragungscharakteristik aufweisen, wobei die ersten Sendevideodaten durch Durchführen von optoelektrischer Umwandlung mit der optoelektrischen Standarddynamikbereich-Übertragungscharakteristik an Standarddynamikbereich-Videodaten erhalten werden; und
    zweite Sendevideodaten, die eine optoelektrische Hochdynamikbereich-Übertragungscharakteristik aufweisen, wobei die zweiten Sendevideodaten durch Durchführen von optoelektrischer Umwandlung mit der optoelektrischen Hochdynamikbereich-Übertragungscharakteristik an Hochdynamikbereich-Videodaten erhalten werden; und
    dritte Sendevideodaten, die eine optoelektrische Hochdynamikbereich-Übertragungscharakteristik aufweisen, wobei die dritten Sendevideodaten durch Durchführen von optoelektrischer Umwandlung mit einer optoelektrischen Standarddynamikbereich-Übertragungscharakteristik an Standarddynamikbereich-Videodaten und Durchführen von Dynamikbereichsumwandlung an den Videodaten, die aus der optoelektrischen Umwandlung resultieren, erhalten werden, wobei die Dynamikbereichsumwandlung auf Umwandlungsinformationen zum Umwandeln eines Werts von Daten, die mit der optoelektrischen Standarddynamikbereich-Übertragungscharakteristik umgewandelt wurden, in einen Wert von Daten, die mit der optoelektrischen Hochdynamikbereich-Übertragungscharakteristik umgewandelt wurden, basiert.

**5.** Sendevorrichtung nach Anspruch 1, wobei die Informationeneinsetzeinheit (101, 109) ferner Informationen über einen Referenzpegel, der ein Luminanzreferenzpegel ist, oder Informationen über einen Verzweigungspegel, der ein Luminanzpegel ist, bei dem sich eine Trajektorie, gefolgt von Kurven einer optoelektrischen Standarddynamikbereich-Übertragungscharakteristik und einer optoelektrischen Hochdynamikbereich-Übertragungscharakteristik, gabelt, in den Behälter einsetzt.

**6.** Sendevorrichtung nach Anspruch 1, wobei der Behälter ein MPEG-2-Transportstrom oder ein MMT-Strom ist.

**7.** Sendeverfahren, das Folgendes umfasst:

einen Codierschritt zum Codieren von Sendevideodaten, die durch Umschalten zwischen mehreren Arten von Sendevideodaten, die vorbestimmte optoelektrische Übertragungscharakteristika aufweisen, erhalten werden, um einen Videostrom zu erhalten;
einen Sendeschritt zum Senden, durch eine Sendeeinheit, eines Behälters in einem vorbestimmten Format, der den Videostrom enthält; und
einen Informationeneinsetzschritt zum Einsetzen, in den Behälter, von Identifikationsinformationen, die eine Art von Sendevideodaten in dem in dem Behälter enthaltenen Videostrom repräsentieren, so dass die Identifikationsinformationen die Art der Sendevideodaten, die aus dem Umschalten resultiert, angeben, von einem Timing einer vorbestimmten Zeitdauer oder länger vor einem Timing des Umschaltens.

**8.** Empfangsvorrichtung, die Folgendes umfasst:

eine Empfangseinheit (202), ausgelegt zum Empfangen eines Behälters in einem vorbestimmten Format, der den einen durch Codieren von Sendevideodaten erhaltenen Videostrom enthält, wobei
die Sendevideodaten eine Ausgabe von Umschalten zwischen mehreren Arten von Sendevideodaten, die vorbestimmte optoelektrische Übertragungscharakteristika aufweisen, sind,
in den Behälter Identifikationsinformationen, die eine Art von Sendevideodaten in dem in dem Behälter enthaltenen Videostrom repräsentieren, eingesetzt werden, so dass die Identifikationsinformationen die Art der Sendevideodaten, die aus dem Umschalten resultiert, angeben, von einem Timing einer vorbestimmten Zeitdauer oder länger vor einem Timing des Umschaltens, und
wobei die Empfangsvorrichtung ferner Folgendes umfasst:

eine Decodiereinheit (204), ausgelegt zum Decodieren des Videostroms, um Sendevideodaten zu erhalten; und
eine Verarbeitungseinheit (207), ausgelegt zum Durchführen eines elektrooptischen Umwandlungsprozesses basierend auf den Identifikationsinformationen und auf einer Anzeigeleistungsfähigkeit an den durch die Decodiereinheit erhaltenen Sendevideodaten, um Bilddaten zur Anzeige zu erhalten.

**9.** Empfangsvorrichtung nach Anspruch 8, wobei die mehreren Arten von Sendevideodaten die folgenden beinhalten:

erste Sendevideodaten, die eine optoelektrische Standarddynamikbereich-Übertragungscharakteristik aufweisen, wobei die ersten Sendevideodaten durch Durchführen von optoelektrischer Umwandlung mit der optoelektrischen Standarddynamikbereich-Übertragungscharakteristik an Standarddynamikbereich-Videodaten erhalten werden; und zweite Sendevideodaten, die eine optoelektrische Hochdynamikbereich-Übertragungscharakteristik aufweisen, wobei die zweiten Sendevideodaten durch Durchführen von optoelektrischer Umwandlung mit der optoelektrischen Hochdynamikbereich-Übertragungscharakteristik an Hochdynamikbereich-Videodaten erhalten werden,
wenn sich die Anzeigeleistungsfähigkeit in einem Hochdynamikbereich befindet und:

in einem Fall, in dem die Sendevideodaten die ersten Sendevideodaten sind, führt die Verarbeitungseinheit Dynamikbereichsumwandlung an den Sendevideodaten durch und führt dann einen elektrooptischen Umwandlungsprozess mit der Hochdynamikbereich-Übertragungscharakteristik an den resultierenden Sendevideodaten durch, um die Bilddaten zur Anzeige zu erhalten, oder in einem Fall, in dem die Sendevideodaten die zweiten Sendevideodaten sind, führt die Verarbeitungseinheit elektrooptische Umwandlung mit der elektrooptischen Hochdynamikbereich-Übertragungscharakteristik an den Sendevideodaten durch, um die Bilddaten zur Anzeige zu erhalten, und
wenn sich die Anzeigeleistungsfähigkeit in einem Standarddynamikbereich befindet und:
in einem Fall, in dem die Sendevideodaten die ersten Sendevideodaten sind, führt die Verarbeitungseinheit elektrooptische Umwandlung mit einer Standarddynamikbereich-Übertragungscharakteristik an den Sendevideodaten durch, um die Bilddaten zur Anzeige zu erhalten, oder in einem Fall, in dem die Sendevideodaten die zweiten Sendevideodaten sind, führt die Verarbeitungseinheit Dynamikbereichsumwandlung an den Sendevideodaten durch und führt dann elektrooptische Umwandlung mit einer elektrooptischen Standarddynamikbereich-Übertragungscharakteristik an den resultierenden Sendevideodaten durch, um die Bilddaten zur Anzeige zu erhalten.

10. Empfangsvorrichtung nach Anspruch 8, wobei die mehreren Arten von Sendevideodaten die folgenden beinhalten:

erste Sendevideodaten, die eine optoelektrische Hochdynamikbereich-Übertragungscharakteristik aufweisen, wobei die ersten Sendevideodaten durch Durchführen von optoelektrischer Umwandlung mit der optoelektrischen Hochdynamikbereich-Übertragungscharakteristik an Hochdynamikbereich-Videodaten erhalten werden; und zweite Sendevideodaten, die eine optoelektrische Hochdynamikbereich-Übertragungscharakteristik aufweisen, wobei die zweiten Sendevideodaten durch Durchführen von optoelektrischer Umwandlung mit einer optoelektrischen Standarddynamikbereich-Übertragungscharakteristik an Standarddynamikbereich-Videodaten und Durchführen von Dynamikbereichsumwandlung an den Videodaten, die aus der optoelektrischen Umwandlung resultieren, erhalten werden, wobei die Dynamikbereichsumwandlung auf Umwandlungsinformationen zum Umwandeln eines Werts von Daten, die mit der optoelektrischen Standarddynamikbereich-Übertragungscharakteristik umgewandelt wurden, in einen Wert von Daten, die mit der optoelektrischen Hochdynamikbereich-Übertragungscharakteristik umgewandelt wurden, basiert,
wenn sich die Anzeigeleistungsfähigkeit in einem Hochdynamikbereich befindet und:

in einem Fall, in dem die Sendevideodaten die ersten Sendevideodaten oder die zweiten Sendevideodaten sind, führt die Verarbeitungseinheit elektrooptische Umwandlung mit der elektrooptischen Hochdynamikbereich-Übertragungscharakteristik an den Sendevideodaten durch, um die Bilddaten zur Anzeige zu erhalten, und
wenn sich die Anzeigeleistungsfähigkeit in einem Standarddynamikbereich befindet und:
in einem Fall, in dem die Sendevideodaten die ersten Sendevideodaten sind, führt die Verarbeitungseinheit Dynamikbereichsumwandlung mit einer ersten Umwandlungscharakteristik an den Sendevideodaten durch und führt dann elektrooptische Umwandlung mit der elektrooptischen Standarddynamikbereich-Übertragungscharakteristik an den resultierenden Sendevideodaten durch, um die Bilddaten zur Anzeige zu erhalten, oder in einem Fall, in dem die Sendevideodaten die zweiten Sendevideodaten sind, führt die Verarbeitungseinheit Dynamikbereichsumwandlung mit einer zweiten Umwandlungscharakteristik an den Sendevideodaten durch und führt dann elektrooptische Umwandlung mit einer elektrooptischen Standarddynamikbereich-Übertragungscharakteristik an den resultierenden Sendevideodaten durch, um die Bilddaten zur Anzeige zu erhalten.

11. Empfangsvorrichtung nach Anspruch 8, wobei die mehreren Arten von Sendevideodaten die folgenden beinhalten:
erste Sendevideodaten, die eine optoelektrische Standarddynamikbereich-Übertragungscharakteristik aufweisen, wobei die ersten Sendevideodaten durch Durchführen von optoelektrischer Umwandlung mit der optoelektrischen Standarddynamikbereich-Übertragungscharakteristik an Standarddynamikbereich-Videodaten erhalten werden; zweite Sendevideodaten, die eine optoelektrische Hochdynamikbereich-Übertragungscharakteristik aufweisen, wobei die zweiten Sendevideodaten durch Durchführen von optoelektrischer Umwandlung mit der optoelektrischen Hochdynamikbereich-Übertragungscharakteristik an Hochdynamikbereich-Videodaten erhalten werden; und dritte Sendevideodaten, die eine optoelektrische Hochdynamikbereich-Übertragungscharakteristik aufweisen, wobei die dritten Sendevideodaten durch Durchführen von optoelektrischer Umwandlung mit einer optoelektrischen Standarddynamikbereich-Übertragungscharakteristik an Standarddynamikbereich-Videodaten und Durchführen von Dynamikbereichsumwandlung an den Videodaten, die aus der optoelektrischen Umwandlung resultieren, erhalten werden, wobei die Dynamikbereichsumwandlung auf Umwandlungsinformationen zum Umwandeln eines Werts von Daten, die mit der optoelektrischen Standarddynamikbereich-Übertragungscharakteristik umgewandelt wurden, in einen Wert von Daten, die mit der optoelektrischen Hochdynamikbereich-Übertragungscharakteristik umgewandelt wurden, basiert, wenn sich die Anzeigeleistungsfähigkeit in einem Hochdynamikbereich befindet und:

in einem Fall, in dem die Sendevideodaten die ersten Sendevideodaten sind, führt die Verarbeitungseinheit Dynamikbereichsumwandlung an den Sendevideodaten durch und führt dann elektrooptische Umwandlung mit einer elektrooptischen Hochdynamikbereich-Übertragungscharakteristik an den resultierenden Sendevideodaten durch, um die Bilddaten zur Anzeige zu erhalten, oder, in einem Fall, in dem die Sendevideodaten die zweiten Sendevideodaten oder die dritten Sendevideodaten sind, führt die Verarbeitungseinheit elektrooptische Umwandlung mit einer elektrooptischen Hochdynamikbereich-Übertragungscharakteristik an den Sendevideodaten durch, um die Bilddaten zur Anzeige zu erhalten, und

wenn sich die Anzeigeleistungsfähigkeit in einem Standarddynamikbereich befindet und:

in einem Fall, in dem die Sendevideodaten die ersten Sendevideodaten sind, führt die Verarbeitungseinheit elektrooptische Umwandlung mit einer elektrooptischen Standarddynamikbereich-Übertragungscharakteristik an den Sendevideodaten durch, um die Bilddaten zur Anzeige zu erhalten, in einem Fall, in dem die Sendevideodaten die zweiten Sendevideodaten sind, führt die Verarbeitungseinheit Dynamikbereichsumwandlung mit einer ersten Umwandlungscharakteristik an den Sendevideodaten durch und führt dann elektrooptische Umwandlung mit einer elektrooptischen Standarddynamikbereich-Übertragungscharakteristik an den resultierenden Sendevideodaten durch, um die Bilddaten zur Anzeige zu erhalten, oder in einem Fall, in dem die Sendevideodaten die dritten Sendevideodaten sind, führt die Verarbeitungseinheit Dynamikbereichsumwandlung mit einer zweiten Umwandlungscharakteristik an den Sendevideodaten durch und führt dann elektrooptische Umwandlung mit einer elektrooptischen Standarddynamikbereich-Übertragungscharakteristik an den resultierenden Sendevideodaten durch, um die Bilddaten zur Anzeige zu erhalten.

12. Empfangsverfahren, das Folgendes umfasst:

einen Empfangsschritt des Empfangens, durch eine Empfangseinheit, eines Behälters in einem vorbestimmten Format, der den einen durch Codieren von Sendevideodaten erhaltenen Videostrom enthält, wobei die Sendevideodaten eine Ausgabe von Umschalten zwischen mehreren Arten von Sendevideodaten, die vorbestimmte optoelektrische Übertragungscharakteristika aufweisen, sind, und

in den Behälter Identifikationsinformationen, die eine Art von Sendevideodaten in dem in dem Behälter enthaltenen Videostrom repräsentieren, eingesetzt werden, so dass die Identifikationsinformationen die Art der Sendevideodaten, die aus dem Umschalten resultiert, angeben, von einem Timing einer vorbestimmten Zeitdauer oder länger vor einem Timing des Umschaltens, und

wobei das Empfangsverfahren ferner Folgendes umfasst:

einen Decodierschritt des Decodierens des Videostroms, um Sendevideodaten zu erhalten; und

einen Verarbeitungsschritt des Durchführens eines elektrooptischen Umwandlungsprozesses basierend auf den Identifikationsinformationen und auf einer Anzeigeleistungsfähigkeit an den durch den Decodierschritt erhaltenen Sendevideodaten, um Bilddaten zur Anzeige zu erhalten.

**Revendications**

1. Dispositif de transmission comprenant :

une unité de codage (108) configurée pour coder des données vidéo de transmission obtenues par commutation entre une pluralité de données vidéo de transmission ayant des caractéristiques de transfert opto-électriques prédéterminées pour obtenir un flux vidéo ;

une unité de transmission (110) configurée pour transmettre un contenant dans un format prédéterminé contenant le flux vidéo ; et

une unité d'insertion d'informations (101, 109) configurée pour insérer, dans le contenant, des informations d'identification représentant un type de données vidéo de transmission dans le flux vidéo contenu dans le contenant, de telle sorte que les informations d'identification indiquent le type de données vidéo de transmission résultant de la commutation, à partir d'un moment situé un temps prédéterminé ou plus longtemps avant un moment de la commutation.

2. Dispositif de transmission selon la revendication 1, la pluralité de types de données vidéo de transmission comprenant :

des premières données vidéo de transmission ayant une caractéristique de transfert opto-électrique à gamme dynamique standard, les premières données vidéo de transmission étant obtenues en effectuant une conversion opto-électrique avec la caractéristique de transfert opto-électrique à gamme dynamique standard sur des données vidéo à gamme dynamique standard ; et

des deuxièmes données vidéo de transmission ayant une caractéristique de transfert opto-électrique à gamme dynamique élevée, les deuxièmes données vidéo de transmission étant obtenues en effectuant une conversion opto-électrique avec la caractéristique de transfert opto-électrique à gamme dynamique élevée sur des données vidéo à gamme dynamique élevée.

**3.** Dispositif de transmission selon la revendication 1, la pluralité de types de données vidéo de transmission comprenant :

des premières données vidéo de transmission ayant une caractéristique de transfert opto-électrique à gamme dynamique élevée, les premières données vidéo de transmission étant obtenues en effectuant une conversion opto-électrique avec la caractéristique de transfert opto-électrique à gamme dynamique élevée sur des données vidéo à gamme dynamique élevée ; et

des deuxièmes données vidéo de transmission ayant une caractéristique de transfert opto-électrique à gamme dynamique élevée, les deuxièmes données vidéo de transmission étant obtenues en effectuant une conversion opto-électrique avec une caractéristique de transfert opto-électrique à gamme dynamique standard sur des données vidéo à gamme dynamique standard et en effectuant une conversion de gamme dynamique sur les données vidéo résultant de la conversion opto-électrique, la conversion de gamme dynamique étant basée sur des informations de conversion pour convertir une valeur de données converties avec la caractéristique de transfert opto-électrique à gamme dynamique standard en une valeur de données converties avec la caractéristique de transfert opto-électrique à gamme dynamique élevée.

**4.** Dispositif de transmission selon la revendication 1, la pluralité de types de données vidéo de transmission comprenant :

des premières données vidéo de transmission ayant une caractéristique de transfert opto-électrique à gamme dynamique standard, les premières données vidéo de transmission étant obtenues en effectuant une conversion opto-électrique avec la caractéristique de transfert opto-électrique à gamme dynamique standard sur des données vidéo à gamme dynamique standard ;

des deuxièmes données vidéo de transmission ayant une caractéristique de transfert opto-électrique à gamme dynamique élevée, les deuxièmes données vidéo de transmission étant obtenues en effectuant une conversion opto-électrique avec la caractéristique de transfert opto-électrique à gamme dynamique élevée sur des données vidéo à gamme dynamique élevée ; et

des troisièmes données vidéo de transmission ayant une caractéristique de transfert opto-électrique à gamme dynamique élevée, les troisièmes données vidéo de transmission étant obtenues en effectuant une conversion opto-électrique avec une caractéristique de transfert opto-électrique à gamme dynamique standard sur des données vidéo à gamme dynamique standard et en effectuant une conversion de gamme dynamique sur les données vidéo résultant de la conversion opto-électrique, la conversion de gamme dynamique étant basée sur des informations de conversion pour convertir une valeur de données converties avec la caractéristique de transfert opto-électrique à gamme dynamique standard en une valeur de données converties avec la caractéristique de transfert opto-électrique à gamme dynamique élevée.

**5.** Dispositif de transmission selon la revendication 1, l'unité d'insertion d'informations (101, 109) insérant en outre, dans le contenant, des informations sur un niveau de référence étant un niveau de luminance de référence ou des informations sur un niveau de branche étant un niveau de luminance auquel une trajectoire suivie par des courbes d'une caractéristique de transfert opto-électrique à gamme dynamique standard et d'une caractéristique de transfert opto-électrique à gamme dynamique élevée bifurque.

**6.** Dispositif de transmission selon la revendication 1, le contenant étant un flux de transport MPEG-2 ou un flux MMT.

**7.** Procédé de transmission comprenant :

une étape de codage consistant à coder des données vidéo de transmission obtenues en commutant entre une pluralité de types de données vidéo de transmission ayant des caractéristiques de transfert opto-électriques prédéterminées pour obtenir un flux vidéo ;
une étape de transmission consistant à transmettre, par une unité de transmission,
un contenant dans un format prédéterminé contenant le flux vidéo ; et
une étape d'insertion d'informations consistant à insérer, dans le contenant, des informations d'identification représentant un type de données vidéo de transmission dans le flux vidéo contenu dans le contenant, de telle sorte que les informations d'identification indiquent le type de données vidéo de transmission résultant de la commutation, à partir d'un moment situé un temps prédéterminé ou plus longtemps avant un moment de la commutation.

8. Dispositif de réception comprenant :

une unité de réception (202) configurée pour recevoir un contenant dans un format prédéterminé contenant un flux vidéo obtenu par codage de données vidéo de transmission,
les données vidéo de transmission étant une sortie de la commutation entre une pluralité de types de données vidéo de transmission ayant des caractéristiques de transfert opto-électrique prédéterminées,
dans le contenant, des informations d'identification représentant un type de données vidéo de transmission du flux vidéo contenu par le contenant étant insérées de telle sorte que les informations d'identification indiquent le type de données vidéo de transmission résultant de la commutation, à partir d'un moment situé un temps prédéterminé ou plus longtemps avant un moment de la commutation, et
le dispositif de réception comprenant en outre :

une unité de décodage (204) configurée pour décoder le flux vidéo afin d'obtenir des données vidéo de transmission ; et
une unité de traitement (207) configurée pour effectuer un processus de conversion électro-optique sur la base des informations d'identification et des performances d'affichage sur les données vidéo de transmission obtenues par l'unité de décodage, afin d'obtenir des données d'image pour l'affichage.

9. Dispositif de réception selon la revendication 8,
la pluralité de types de données vidéo de transmission comprenant : des premières données vidéo de transmission ayant une caractéristique de transfert opto-électrique à gamme dynamique standard, les premières données vidéo de transmission étant obtenues en effectuant une conversion opto-électrique avec la caractéristique de transfert opto-électrique à gamme dynamique standard sur des données vidéo à gamme dynamique standard ; et des deuxièmes données vidéo de transmission ayant une caractéristique de transfert opto-électrique à gamme dynamique élevée, les deuxièmes données vidéo de transmission étant obtenues en effectuant une conversion opto-électrique avec la caractéristique de transfert opto-électrique à gamme dynamique élevée sur des données vidéo à gamme dynamique élevée,
lorsque les performances d'affichage se situent dans une gamme dynamique élevée et :

dans le cas où les données vidéo de transmission sont les premières données vidéo de transmission, l'unité de traitement effectue une conversion de gamme dynamique sur les données vidéo de transmission et effectue ensuite un processus de conversion électro-optique avec la caractéristique de transfert électro-optique à gamme dynamique élevée sur les données vidéo de transmission résultantes pour obtenir les données d'image à afficher, ou dans le cas où les données vidéo de transmission sont les deuxièmes données vidéo de transmission, l'unité de traitement effectue une conversion électro-optique avec la caractéristique de transfert électro-optique à gamme dynamique élevée sur les données vidéo de transmission pour obtenir les données d'image à afficher, et
lorsque les performances d'affichage se situent dans une gamme dynamique standard et :
dans le cas où les données vidéo de transmission sont les premières données vidéo de transmission, l'unité de traitement effectue une conversion électro-optique avec une caractéristique de transfert électro-optique à gamme dynamique standard sur les données vidéo de transmission pour obtenir les données d'image à afficher, ou dans le cas où les données vidéo de transmission sont les deuxièmes données vidéo de transmission, l'unité de traitement effectue une conversion de gamme dynamique sur les données vidéo de transmission et effectue ensuite une conversion électro-optique avec une caractéristique de transfert électro-optique à gamme dynamique standard sur les données vidéo de transmission résultantes pour obtenir les données d'image à afficher.

10. Dispositif de réception selon la revendication 8,
la pluralité de types de données vidéo de transmission comprenant : des premières données vidéo de transmission ayant une caractéristique de transfert opto-électrique à gamme dynamique élevée, les premières données vidéo de transmission étant obtenues en effectuant une conversion opto-électrique avec la caractéristique de transfert opto-électrique à gamme dynamique élevée sur des données vidéo à gamme dynamique élevée ; et des deuxièmes données vidéo de transmission ayant une caractéristique de transfert opto-électrique à gamme dynamique élevée, les deuxièmes données vidéo de transmission étant obtenues en effectuant une conversion opto-électrique avec une caractéristique de transfert opto-électrique à gamme dynamique standard sur des données vidéo à gamme dynamique standard et en effectuant une conversion de gamme dynamique sur les données vidéo résultant de la conversion opto-électrique, la conversion de gamme dynamique étant basée sur des informations de conversion pour convertir une valeur de données converties avec la caractéristique de transfert opto-électrique à gamme dynamique standard en une valeur de données converties avec la caractéristique de transfert opto-électrique à gamme dynamique élevée,
lorsque les performances d'affichage se situent dans une gamme dynamique élevée et :

> dans le cas où les données vidéo de transmission sont soit des premières données vidéo de transmission, soit des deuxièmes données vidéo de transmission, l'unité de traitement effectue une conversion électro-optique avec la caractéristique de transfert électro-optique à gamme dynamique élevée sur les données vidéo de transmission pour obtenir les données d'image à afficher, et
> lorsque les performances d'affichage se situent dans une gamme dynamique standard et :
> dans le cas où les données vidéo de transmission sont les premières données vidéo de transmission, l'unité de traitement effectue une conversion de gamme dynamique avec une première caractéristique de conversion sur les données vidéo de transmission et effectue ensuite une conversion électro-optique avec la caractéristique de transfert électro-optique de gamme dynamique standard sur les données vidéo de transmission résultantes pour obtenir les données d'image à afficher, ou dans le cas où les données vidéo de transmission sont les deuxièmes données vidéo de transmission, l'unité de traitement effectue une conversion de gamme dynamique avec une deuxième caractéristique de conversion sur les données vidéo de transmission et effectue ensuite une conversion électro-optique avec une caractéristique de transfert électro-optique de gamme dynamique standard sur les données vidéo de transmission résultantes pour obtenir les données d'image à afficher.

11. Dispositif de réception selon la revendication 8,
la pluralité de types de données vidéo de transmission comprenant : des premières données vidéo de transmission ayant une caractéristique de transfert opto-électrique à gamme dynamique standard, les premières données vidéo de transmission étant obtenues en effectuant une conversion opto-électrique avec la caractéristique de transfert opto-électrique à gamme dynamique standard sur des données vidéo à gamme dynamique standard ; des deuxièmes données vidéo de transmission ayant une caractéristique de transfert opto-électrique à gamme dynamique élevée, les deuxièmes données vidéo de transmission étant obtenues en effectuant une conversion opto-électrique avec la caractéristique de transfert opto-électrique à gamme dynamique élevée sur des données vidéo à gamme dynamique élevée ; et des troisièmes données vidéo de transmission ayant une caractéristique de transfert opto-électrique à gamme dynamique élevée, les troisièmes données vidéo de transmission étant obtenues en effectuant une conversion opto-électrique avec une caractéristique de transfert opto-électrique à gamme dynamique standard sur des données vidéo à gamme dynamique standard et en effectuant une conversion de gamme dynamique sur les données vidéo résultant de la conversion opto-électrique, la conversion de gamme dynamique étant basée sur des informations de conversion pour convertir une valeur de données converties avec la caractéristique de transfert opto-électrique à gamme dynamique standard en une valeur de données converties avec la caractéristique de transfert opto-électrique à gamme dynamique élevée,
lorsque les performances d'affichage se situent dans une gamme dynamique élevée et :

> dans le cas où les données vidéo de transmission sont les premières données vidéo de transmission, l'unité de traitement effectue une conversion de gamme dynamique sur les données vidéo de transmission et effectue ensuite une conversion électro-optique avec une caractéristique de transfert électro-optique à gamme dynamique élevée sur les données vidéo de transmission résultantes pour obtenir les données d'image à afficher, ou dans le cas où les données vidéo de transmission sont les deuxièmes données vidéo de transmission ou les troisièmes données vidéo de transmission, l'unité de traitement effectue une conversion électro-optique avec une caractéristique de transfert électro-optique à gamme dynamique élevée sur les données vidéo de transmission pour obtenir les données d'image à afficher, et
> lorsque les performances d'affichage se situent dans une gamme dynamique standard et :
> dans le cas où les données vidéo de transmission sont les premières données vidéo de transmission, l'unité de traitement effectue une conversion électro-optique avec une caractéristique de transfert électro-optique à gamme dynamique standard sur les données vidéo de transmission pour obtenir les données d'image à afficher,
> dans le cas où les données vidéo de transmission sont les deuxièmes données vidéo de transmission, l'unité de traitement effectue une conversion de gamme dynamique avec une première caractéristique de conversion sur les données vidéo de transmission et effectue ensuite une conversion électro-optique avec une caractéristique de transfert électro-optique à gamme dynamique standard sur les données vidéo de transmission résultantes pour obtenir les données d'image à afficher, ou dans le cas où les données vidéo de transmission sont les troisièmes données vidéo de transmission, l'unité de traitement effectue une conversion de gamme dynamique avec une deuxième caractéristique de conversion sur les données vidéo de transmission et effectue ensuite une conversion électro-optique avec une caractéristique de transfert électro-optique de gamme dynamique standard sur les données vidéo de transmission résultantes pour obtenir les données d'image à afficher.

**12.** Procédé de réception comprenant :

une étape de réception consistant à recevoir, par une unité de réception, un contenant dans un format prédéterminé contenant un flux vidéo obtenu par codage de données vidéo de transmission,
les données vidéo de transmission étant une sortie de commutation entre une pluralité de de données vidéo de transmission ayant des caractéristiques de transfert opto-électriques prédéterminées, et
dans le contenant, des informations d'identification représentant un type de données vidéo de transmission du flux vidéo contenu par le contenant étant insérées de telle sorte que les informations d'identification indiquent le type de données vidéo de transmission résultant de la commutation, à partir d'un moment situé un temps prédéterminé ou plus longtemps avant un moment de la commutation,
le procédé de réception comprenant en outre :

une étape de décodage consistant à décoder le flux vidéo pour obtenir des données vidéo de transmission ; et
une étape de traitement consistant à effectuer un processus de conversion électro-optique sur la base des informations d'identification et des performances d'affichage sur les données vidéo de transmission obtenues par l'étape de décodage, afin d'obtenir des données d'image pour l'affichage.

# FIG. 1

10

*FIG. 2*

100A

EP 3 276 968 B1

FIG. 3

TRANSMITTED
CODE VALUE

RELATIVE MAXIMUM LEVEL M

REFERENCE LEVEL G

BRANCH LEVEL B

a

b

0

Pf

P1

P2

INPUT LUMINANCE LEVEL
[cd/m²]

EP 3 276 968 B1

33

## FIG. 4

IDENTIFICATION
INFORMATION
INSERTION TIMING Tn

TRANSMISSION
VIDEO DATA
SWITCHING TIMING Sn

S0    S1    S2
T0    T1    T2

TRANSMISSION
VIDEO DATA

HDR SERVICE   SDR SERVICE   HDR SERVICE   SDR SERVICE

time

EP 3 276 968 B1

## FIG. 5

New descriptor 'HDR descriptor_type1' Syntax

| Syntax | No. of Bits | Format |
|---|---|---|
| HDR descriptor_type1( ) { | | |
|    descriptor_tag | 8 | bslbf |
|    descriptor_length | 8 | bslbf |
|    HDR_SDR_flag | 1 | bslbf |
|    characteristics_info_flag | 1 | bslbf |
|    reserved | 5 | 0x1f |
|    if( characteristics_info_flag ) { | | |
|       transferfunction | 8 | uimsbf |
|       referencelevel | 8 | uimsbf |
|       branchlevel | 8 | uimsbf |
|    } | | |
|  } | | |
| } | | |

EP 3 276 968 B1

# FIG. 6

New descriptor 'HDR descriptor_type3' Syntax

| Syntax | No. of Bits | Format |
|---|---|---|
| HDR descriptor_type3( ) { | | |
| descriptor_tag | 8 | bslbf |
| descriptor_length | 8 | bslbf |
| HDR_SDR_flag | 1 | bslbf |
| characteristics_info_flag | 1 | bslbf |
| SDR_mapping_type | 2 | bslbf |
| reserved | 3 | 0x1f |
| if( characteristics_info_flag ) { | | |
| transferfunction | 8 | uimsbf |
| referencelevel | 8 | uimsbf |
| branchlevel | 8 | uimsbf |
| } | | |
| } | | |
| } | | |

EP 3 276 968 B1

FIG. 7

Semantics

| | | |
|---|---|---|
| HDR_SDR_flag | | |
| | "1" | CURRENT STREAM IS HDR |
| | "0" | CURRENT STREAM IS SDR |
| | | |
| characteristics_info_flag | | |
| | 1 | CHARACTERISTIC INFORMATION IS PRESENT |
| | 0 | CHARACTERISTIC INFORMATION IS ABSENT |
| | | |
| SDR_mapping_type | | |
| | 0 | SDR CHARACTERISTICS ARE NOT MAPPED ON HDR CHARACTERISTICS |
| | 1 | SDR CHARACTERISTICS ARE MAPPED ON HDR CHARACTERISTICS |
| | | |
| transferfunction | | |
| | "1" | BT.709-5 Transfer Function (SDR) |
| | "14" | 10bit BT.2020 Transfer Function (SDR) |
| | "16" | SMPTE 2084 Transfer Function (HDR1) |
| | "25" | HDR (HDR2) |
| | | |
| referencelevel | | |
| | 0 ~ 100 | RESULT OF DIVIDING VALUE, WHICH IS SPECIFIED BY VALUE OF 0 TO 100 IN RELATIVE RANGE NORMALIZED TO MAXIMUM OF 1, BY 100 IS RECOGNIZED AS REFERENCE LEVEL. |
| branchlevel | | |
| | 0 ~ 100 | RESULT OF DIVIDING VALUE, WHICH IS SPECIFIED BY VALUE OF 0 TO 100 IN RELATIVE RANGE NORMALIZED TO MAXIMUM OF 1, BY 100 IS RECOGNIZED AS RELATIVE BRANCH LEVEL. |

# FIG. 8

TS STRUCTURE

EP 3 276 968 B1

## FIG. 9

MMT STRUCTURE

MMT Stream

Packet Access MESSAGE PACKET

SUPPLY TABLES OF TRANSMISSION SIGNALS

MMT Package Table (MPT)

asset_type (= HEVC video)
Asset_id (ID1)

HDR descriptor_type1

or    HDR descriptor_type3

ANOTHER Table

ANOTHER MESSAGE PACKET

ID1: video (HEVC)

VUI

transfer characteristics

FIG. 10

FIG. 11

## FIG. 12

# FIG. 13

New descriptor 'HDR descriptor_type2' Syntax

| Syntax | No. of Bits | Format |
|---|---|---|
| HDR descriptor_type2( ) { | | |
| descriptor_tag | 8 | bslbf |
| descriptor_length | 8 | bslbf |
| HDR_SDR_flag | 1 | bslbf |
| characteristics_info_flag | 1 | bslbf |
| reserved | 5 | 0x1f |
| if( characteristics_info_flag ) { | | |
| transferfunction | 8 | uimsbf |
| referencelevel | 8 | uimsbf |
| branchlevel | 8 | uimsbf |
| } | | |
| } | | |
| } | | |

## FIG. 14

TS STRUCTURE

# FIG. 15

MMT STRUCTURE

# FIG. 16

100C

- Vh → HDR OPTO-ELECTRICAL TRANSFER UNIT (103)
- Vs → SDR OPTO-ELECTRICAL TRANSFER UNIT (104)
- DYNAMIC RANGE CONVERSION UNIT (105) ← CONVERSION INFORMATION
- 106C (switch)
- RGB/YCbCr CONVERSION UNIT (107) → V1
- VIDEO ENCODER (108) → VS
- CONTAINER ENCODER (109) → TRANSPORT STREAM
- TRANSMISSION UNIT (110)
- CONTROL UNIT (101)

# FIG. 17

New descriptor 'dynamic_range_conversion descriptor' Syntax

| Syntax | No. of Bits | Format |
|---|---|---|
| dynamic_range_conversion descriptor( ) { | | |
| descriptor_tag | 8 | bslbf |
| descriptor_length | 8 | bslbf |
| highdynamicrange | 8 | uimsbf |
| transferfunction | 8 | uimsbf |
| xycolourprimaries | 8 | uimsbf |
| matrixcoefficients | 8 | uimsbf |
| referencelevel | 8 | uimsbf |
| branchlevel | 8 | uimsbf |
| original_transferfunction | 8 | uimsbf |
| } | | |
| } | | |

EP 3 276 968 B1

# FIG. 18

**semantics**

highdynamicrange
       "1"                    CURRENT STREAM IS HDR
       "0"                    CURRENT STREAM IS SDR

transferfunction
       "1"                    BT.709-5 Transfer Function   (SDR)
       "14"                 10bit BT.2020 Transfer Function (SDR)
       "16"                 SMPTE 2084 Transfer Function (HDR1)
       "25"                 HDR                        (HDR2)

xycolourprimaries
       "1"                    BT.709-5
       "9"                    BT.2020
       "10"                 SMPTE 428 or XYZ

matrixcoefficients
       "1"                    BT.709-5
       "9"                    BT.2020 non-constant lumiinance
       "11"                 SMPTE 2085 or $Y'D'_zD'_x$

referencelevel
       0 ~ 100         RESULT OF DIVIDING VALUE, WHICH IS SPECIFIED BY VALUE OF 0 TO 100 IN RELATIVE RANGE NORMALIZED TO MAXIMUM OF 1, BY 100 IS RECOGNIZED AS REFERENCE LEVEL.

branchlevel
       0 ~ 100         RESULT OF DIVIDING VALUE, WHICH IS SPECIFIED BY VALUE OF 0 TO 100 IN RELATIVE RANGE NORMALIZED TO MAXIMUM OF 1, BY 100 IS RECOGNIZED AS RELATIVE BRANCH LEVEL.

original_transferfunction
       "1"                    BT.709-5 Transfer Function   (SDR)
       "14"                 10bit BT.2020 Transfer Function (SDR)
       "16"                 SMPTE 2084 Transfer Function (HDR1)
       "25"                 HDR                        (HDR2)

# FIG. 19

TS STRUCTURE

Transport Stream

PMT

EIT

PID1 : Video PES

PES header

Timestamp (DTS/PTS)

PES payload

Video coded stream

VUI
transfer characteristics

Program Descriptor

Video ES loop

Stream_type (= HEVC video)
Elementary PID (PID1)

dynamic_range_conversion descriptor

or   HDR  descriptor_type3

EP 3 276 968 B1

## FIG. 20

MMT STRUCTURE

# FIG. 21

## 200A

# FIG. 22

# FIG. 23

# FIG. 24

# FIG. 25

200B

EP 3 276 968 B1

# FIG. 26

OUTPUT
LUMINANCE
LEVEL
[cd/m²]

P2

b

Dynamic
Range
conversion

P1

a

Pf

0

TRANSMITTED
CODE VALUE

BRANCH
LEVEL B

REFERENCE
LEVEL G

RELATIVE
MAXIMUM
LEVEL M

**EP 3 276 968 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2015042890 A1

**Non-patent literature cited in the description**

- **TIMBORER.** Non-Linear Opto-Electrical Transfer Functions for High Dynamic Range Television. *Research & Development White Paper WHP 283,* July 2014